# EUROPEAN PATENT APPLICATION

(11) **EP 2 348 329 A1**
(43) Date of publication of application: **27.07.2011**
(21) Application number: 09820638.6
(22) Date of filing: 16.10.2009
(51) Int. Cl.: G01S 7/03, G01S 13/56, G01S 13/58, G01V 3/12

(54) **RADIO WAVE SENSOR**

(30) Priority: 16.10.2008 JP 2008267362; 09.10.2009 JP 2009235631
(71) Applicant: Toto Ltd., Fukuoka 802-8601 (JP)
(72) Inventor: IWATA Kengo, Kitakyushu-shi Fukuoka 802-8601 (JP); ABE Tomoyuki, Kitakyushu-shi Fukuoka 802-8601 (JP)
(74) Representative: Zimmermann & Partner
(86) International application number: PCT/JP2009/067904
(87) International publication number: WO 2010/044460

(57) **Abstract**

The object of the present invention is to provide a low power consumption, compact radio wave sensor capable of accurately detecting the presence and mobile status of a detected object present within a detection area, and having a superior S/N ratio. The radio wave sensor comprising: an oscillator circuit 1 for producing a high-frequency signal; a ground electrode 3 formed on one surface of a substrate 2 formed of a dielectric body or on approximately the entire surface of the interior thereof, acting as ground to a high-frequency signal; an antenna electrode 6 formed on the other surface of the substrate, for radiating a high-frequency signal as a radio beam and receiving a radio beam which collides with a detected object and is reflected back from the object; and a wave detecting element 7 for detecting a high-frequency signal received by the antenna electrode 6; wherein one of the terminals of the wave detecting element 7 is connected to the antenna electrode 6 via a frequency adjustment line 12 for adjusting the frequency of the antenna electrode 6, and the other terminal is connected to the ground electrode 3; and the frequency adjustment line 12 is connected to the antenna electrode 6 at a position different from that of an electrical feeding point (in Fig., a position of a conducting hole 13a) provided on the antenna electrode 6 to supply electricity to the antenna electrode 6 with the high-frequency signal produced by the oscillator circuit 1.

## Description

### Technical Field

The present invention relates to a radio wave sensor, and more particularly to a radio wave sensor used in sensing technologies utilizing radio wave beams.

### Background Art

Conventionally, radio wave sensors (moving object detection sensors) for detecting the presence or mobile status of a detected object (moving object) in a detection area using a radio beam (usable frequency band approved within Japan: 10.50-10.55 GHz and 24.05-24.25 GHz) have been used in fields such as automobiles, security, home equipment, and automatic doors.

### References

### Patent References

Patent Reference 1: JP-A-2004-361355 (Paragraphs 0020-0021; Fig. 1)
Patent Reference 2: JP-A-2005-81032 (Paragraphs 0045-0046; Fig. 4)

### Problem to be Solved by the Invention

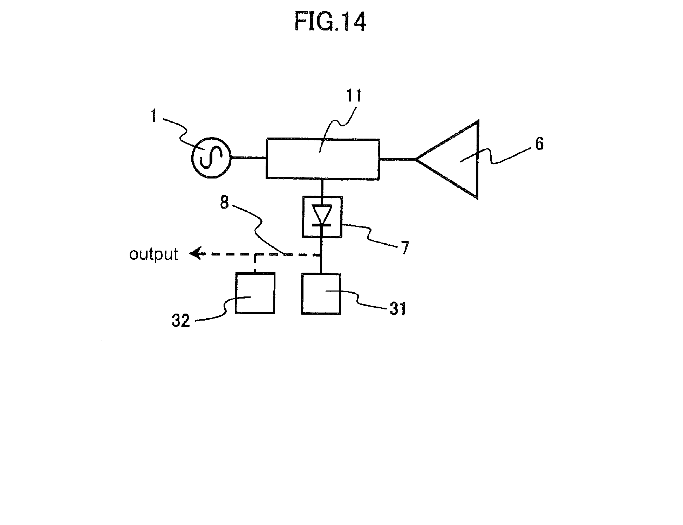

0004 As a radio wave sensor for detecting the presence and mobile status of a detected object in a detection area using a radio wave beam, the radio wave sensor of Patent Reference 1 shown in Fig. 14 comprises: an oscillator circuit 1 for producing a high frequency signal; a transmitting/receiving antenna 6 for transmitting and receiving a high frequency signal as a radio wave beam; and a wave detecting element (diode) 7 for extracting the difference in frequency between the transmitted high frequency signal (transmitted wave) from the transmitting/receiving antenna 6 and the received high frequency signal (received wave) from the transmitting/receiving antenna 6.

The oscillator circuit 1 and the transmitting/receiving antenna 6 are connected via a transmission line 11, and the anode terminal of the diode 7 is directly connected midway along the transmission line 11. A high frequency signal produced in the oscillator circuit 1 is propagated via the transmission line 11 to the transmitting/receiving antenna 6 and transmitted as a radio beam. The radio wave sensor at the transmitting/receiving antenna 6 receives a high frequency signal which has collided with a detected object present within the detection area and been reflected back; extracts the difference between the transmitted wave and the received wave using the diode 7 and externally outputs it as a detection signal from the output line 8 connected to the cathode terminal of the diode 7.

The S/N ratio, which serves as an index of the radio wave sensor's detection performance, is determined by the high frequency signal electrical power (received signal power: S) of the high frequency signal returned to the radio wave sensor after transmitted from the radio wave sensor into a space (detection area) and colliding with a detected object present in the detection area and is reflected, and by the voltage amplitude value of the detection signal output from the radio wave sensor when there is no detected object present in the detection area (dark noise: N). The electrical power of the high frequency signal received after transmitted as a radio beam from the radio wave sensor into the space attenuates with distance, and the degree of that attenuation increases as frequency increases. Therefore when the frequency of the high frequency signal transmitted from the radio wave sensor to the space increases, the received signal electrical power of the high frequency signal when it hits the detected object present in the detection area and is reflected and returned to the radio wave sensor drops, reducing the S/N ratio.

In the radio wave sensor shown in Fig. 14, the anode terminal of the diode 7 is directly connected to the transmission line 11 pathway, therefore a part of the electrical power of the high frequency signal produced in the oscillator circuit 1 is input to the diode 7. The power of the high frequency signal to be transmitted to the space from the transmitting/receiving antenna 6 is thus necessarily reduced. The high frequency signal produced in the oscillator circuit 1 is propagated as a travelling wave to the transmitting/receiving antenna 6 via the transmission line 11, therefore the power of the high frequency signal input to the diode 7 cannot be adjusted. In addition, the higher the high frequency signal frequency used in the radio wave sensor becomes, the greater is the required accuracy of shape, length, and installation position for the detecting stub 31, the output line 8, and the high frequency blocking stub 32 connected at subsequent stages of the output line 8. Furthermore, there is a greater tendency for impedance mismatching to occur at the connection point between the anode terminal of the diode 7 and the transmission line 11 in light of variability in the capacitance of the diode 7 and the condition of solder connections. This presents a risk that the high frequency signal produced by the oscillator circuit will be reflected at the connection point between the anode terminal of the diode 7 and the transmission line 11, changing the frequency of the high frequency signal produced by the oscillator circuit and reducing the power of the high frequency signal propagated to the transmitting/receiving antenna.

On the other hand, in a means for sending and receiving high-frequency signals using equipment such as horn antenna with relatively high antenna gain, or array antenna containing multiple antenna elements mutually interconnected in a transmission path for amplifying the power of the high-frequency signal produced by the oscillator circuit 1, suppressing a reduction of the S/N ratio by compensating for the reduction in high-frequency signal power transmitted from an antenna into the space is easily conceivable.

When such means are used, however, it is not possible to respond to the requirements placed on residential equipment and consumer equipment products in recent years for reduced power consumption and size (decreased thickness) in the radio wave sensor, which arise from environmental problems and the like.

Therefore, an object of the present invention is to provide a low power consumption, compact radio wave sensor capable of accurately detecting the presence and mobile status of a detected object present within a detection area, and having a superior S/N ratio.

### Means for Resolving the Problem

To achieve the aforementioned object, the radio wave sensor of the present invention comprises: an oscillator circuit for producing a high-frequency signal; a substrate formed of a dielectric body; a ground electrode acting as a ground for the high-frequency signal, formed on one surface of the substrate, or over approximately the entire surface of the interior of the substrate; an antenna electrode formed on the other surface of the substrate for radiating or transmitting the high-frequency signal as a radio beam and receiving the radio beam which collides with a detected object and is reflected back therefrom; and a wave detection element for detecting a high frequency signal received by the antenna electrode; wherein one of either of the terminals of the detection element is connected to the antenna electrode via a frequency adjustment line for adjusting the frequency of the antenna electrode, and the other terminal is connected to the ground electrode; the frequency adjustment line is connected to a position on the antenna electrode which differs from an electrical feeding point provided on the antenna electrode for supplying electricity to the antenna electrode with the high-frequency signal produced by the oscillator circuit.

In the present invention the frequency adjustment line is preferably connected at a position on the antenna electrode having a different impedance from that of the frequency adjustment line.

In the present invention the frequency adjustment line is preferably connected at a position on the antenna electrode at which the electrical field generated when the antenna electrode is excited is approximately at its maximum.

In the present invention, the antenna electrode is a rectangular antenna electrode with a vertical or horizontal polarizing component, and the frequency adjustment line is connected to an edge of the antenna electrode which perpendicularly intersects the direction of excitation of the antenna electrode.

To accomplish the aforementioned objectives, the radio wave sensor of the present invention comprises an oscillator circuit for producing a high-frequency signal; a substrate consisting of a dielectric; a ground electrode acting as a ground to the high-frequency signal, formed on one surface of the substrate or on approximately the entire surface of its interior; an antenna electrode formed on the other side of the substrate for radiating a high-frequency signal as a radio wave beam and for receiving radio wave beams which collide with a detected object and are reflected and returned; and a wave detecting element for detecting high-frequency signals received by the antenna electrode; wherein one of either of the terminals of the wave detecting element is connected to the ground electrode and, the other terminal of the detecting element is connected at a position on the antenna electrode different from the electrical feeding point provided on the antenna electrode for supplying the high frequency signal produced by the oscillator circuit to the antenna electrode.

In the present invention the other terminal of the detection element is preferably connected at a position on the antenna electrode having a different impedance from that of the other terminal of the detector element.

In the present invention the other terminal of the wave detecting element is preferably connected at a position on the antenna electrode at which the electrical field generated when the antenna electrode is excited is approximately at its maximum.

In the present invention, the antenna electrode is a rectangular antenna electrode with a vertical or horizontal polarizing component, and the other terminal of the detection element is connected to the vicinity of an edge of the antenna electrode which perpendicularly intersects the direction of excitation of the antenna electrode.

The present invention is also preferably further provided with an output line for externally outputting the detection signal detected by the detection element, wherein the electrical length from the antenna electrode to the ground electrode, and the installation position of the output line relative to the antenna electrode, are defined so that the frequency of the high-frequency signal produced by the oscillator circuit is approximately the same as the resonant frequency of the antenna electrode. In the present invention thus constituted, a high-frequency signal is efficiently excited on the antenna electrode by making the frequency of the high-frequency signal produced by the oscillator circuit approximately the same as the resonant frequency on the antenna electrode. As a result, the transmitted signal power of the radio beam radiated from the antenna electrode can be maximized, as can the received signal power when receiving. Since the power detected at the detection element via the antenna electrode can be increased, detection accuracy is improved.

In the present invention the electrical length from the antenna electrode to the ground electrode is preferably defined by the length at which the high-frequency signal passing through the detection element via the antenna electrode is totally reflected by the ground electrode, and the output line attachment position is defined by the position of the antenna electrode at which the electrical field generated is at a minimum when the antenna electrode is excited. In the present invention thus constituted, the frequency of the high-frequency signal produced by the oscillator circuit and the resonant frequency of the antenna electrode can be made approximately equal using a simple structure, and a stable detection accuracy can be obtained when converting to high frequency, even in the presence of manufacturing variations.

In the present invention the electrical length from the antenna electrode to the ground electrode is preferably an odd-numbered multiple of a 1/4 wavelength based on the wavelength determined by the frequency of the high-frequency signal propagated on a substrate. In the present invention thus constituted, the voltage level of the dark noise of the detected signal detected by the detection element (here dark noise refers to the amplitude voltage value of the detection signal externally output via the output line when there is no detected object present in the detection range of the sensor) can be minimized, thereby enabling an improvement in the S/N ratio and in detection accuracy.

### Effect of the Invention

The present invention provides for a low power-consumption, compact radio wave sensor with a superior S/N ratio, capable of accurately detecting the presence and mobile status of a detected object present within a detection area.

### Brief Description of Drawings

Fig. 1: A radio wave sensor circuit block diagram according to a first embodiment of the present invention.
Fig. 2: (a) a front elevation diagram, (b) a perspective diagram of the interior seen from the front side, and (c) a perspective diagram of the rear surface portion seen from the front side, of a radio wave sensor according to a first embodiment of the present invention.
Fig. 3: (a) an expanded view of the major portions of a section through A-A', and (b) a graph depicting the relationship between electrical length converted in wavelength unit, and dark noise, in a radio wave sensor according to a first embodiment of the present invention.
Fig. 4: (a) a graph showing an example of the detection characteristics of a diode mounted on a radio wave sensor, and (b) the voltage waveform of a detection signal output from a radio wave sensor according to a first embodiment of the present invention.
Fig. 5: (a) a main portion front elevation showing a Variation 1, and (b) a main portion front elevation showing a Variation 2 according to a first embodiment of the present invention.
Fig. 6: (a) a main portion front elevation showing a Variation 3, and (b) a main portion front elevation showing a Variation 4 according to a first embodiment of the present invention.
Fig. 7: (a) a main portion front elevation showing a Variation 5, and (b) a main portion front elevation showing a Variation 6 according to a first embodiment of the present invention.
Fig. 8: (a) a circuit block diagram, and (b) a front elevation of a radio wave sensor according to a second embodiment of the present invention.
Fig. 9: (a) a main portion front elevation showing a Variation 7, and (b) a main portion front elevation showing a Variation 8 according to a second embodiment of the present invention.
Fig. 10: (a) a circuit block diagram, and (b) a front elevation of a radio wave sensor according to a third embodiment of the present invention.
Fig. 11: (a) a graph explaining the detection principle of a radio wave sensor, and (b) a graph showing the relationship between the phase difference and distance obtained from multiple detection signals output from a radio wave sensor in a third embodiment according to the present invention.
Fig. 12: A front elevation diagram showing a Variation 9 of a radio wave sensor according to a third embodiment of the present invention.
Fig. 13: A graph showing the waveform of multiple detection signals output from a radio wave sensor according to a third embodiment of the present invention.
Fig. 14: A circuit block diagram showing a radio wave sensor pertaining to the conventional art.

### Detailed Description

The radio wave sensor of the present invention comprises an oscillator circuit for producing a high-frequency signal; a substrate consisting of a dielectric; a ground electrode acting as a ground to the high-frequency signal, formed on one surface of the substrate or on approximately the entire surface of its interior; a transmitting antenna for transmitting as a radio wave beam the high-frequency signal produced by the oscillator circuit; a receiving antenna for receiving a high-frequency signal when it collides with a detected object present in a detection area and is reflected back; a wave detecting element connected to the receiving antenna for detecting a high-frequency signal; an output line for externally outputting the detection signal output from the wave detecting element; and voltage adjustment means for adjusting the voltage value of the detection signal output from the wave detecting element. The wave detection element has the function of detecting a high-frequency signal (high-frequency power) and converting it to a DC voltage and is, for example, a Schottky diode. It is sufficient for the wave detecting element to have a semiconductor structure serving as a diode; the interval between the drain terminal and gate terminal or the interval between the gate terminal and source terminal of a FET (field effect transistor) may also be used as a wave detecting element. The voltage adjustment means has the function of adjusting the voltage value of the detection signal output from the wave detecting element, and is a resistor comprising a film shaped resistor body formed on the surface of a ceramic substrate, one of the terminals of which is grounded.

Various forms of transmitting antennas and receiving antennas are conceivable, such as a dipole antenna, a horn antenna, or a microstrip antenna; the transmitting antenna and receiving antenna do not necessarily require the same antenna structure and shape so long as their polarization directions are approximately the same. It is also possible for the transmitting antenna and the receiving antenna to transmit and receive a high-frequency signal with a single antenna. Given considerations of reduced power consumption and smaller size (thinner form) for the wave sensor, a microstrip antenna is preferred, wherein a ground electrode acting as a high-frequency signal ground is provided on one surface of, or approximately the entire surface of the interior of, a substrate formed of a dielectric body, and a thin film antenna electrode for transmitting and receiving a high-frequency signal as a radio beam is formed on the other surface thereof. By forming multiple antenna electrodes serving as transmitting antenna(s) and receiving antenna(s) on the same substrate and disposing the transmitting antenna electrode surface parallel to the receiving antenna electrode surface, the presence and mobile status of a detected object present in a detection area in front of the transmitting antenna and the receiving antenna can be detected. By forming the antenna electrode serving as the transmitting antenna and the antenna electrode serving as the receiving antenna on separate substrates, respectively, and disposing these so that the transmitting antenna electrode surface faces the receiving antenna electrode surface, the presence and mobile status of a detected object present in the space sandwiched by the transmitting antenna and the receiving antenna can be detected.

It is preferable that the shape of the ground electrode formed in the interior or on the surface of the substrate be rectangular as is the antenna electrode so as to face the rectangularly shaped antenna electrode. It is preferable that the length of at least one side of a ground electrode parallel to the direction of excitation of the rectangularly shaped antenna electrode be an odd numbered multiple of approximately a half wavelength, based on the wavelength determined by the frequency of the high-frequency signal (produced by the oscillator circuit) propagated on the substrate. By so doing, extremely small high-frequency currents propagated to the ground electrode can be concentrated at the ground electrode edge even if the frequency of the high-frequency signal increases and the shape (the length of one side) of the ground electrode relative to the wavelength propagated on the substrate increases, so as to cause the area around the center of the ground electrode to act as stable high-frequency signal ground. Therefore by forming an antenna electrode disposed on a substrate opposite to a ground electrode at approximately the center portion of the ground electrode (a position on the ground electrode further inward than approximately 1/4 wavelength from the ground electrode edge), the shape of the radiation of a high-frequency signal transmitted and received as a radio beam from the antenna electrode can be controlled so that it essentially matches designs based on electromagnetic field simulations. If the oscillator circuit is formed on the same substrate as the antenna electrode, impedance mismatches inside the oscillator circuit and in the high-frequency signal transmission path from the oscillator circuit to the antenna electrode can be suppressed, and an approximately uniform microstrip line can be constituted, thereby permitting a high frequency signal with a predetermined frequency and power to be efficiently propagated to the antenna electrode.

The oscillator circuit and transmitting antenna may be disposed on the same substrate, or may be separately provided. By using transmission lines or conducting holes formed in the substrate, or coaxial cable or coaxial connectors, as signal transmission means for connecting the oscillator circuit and the transmitting antenna, propagation to the transmitting antenna can be accomplished with virtually no loss of the high-frequency signal power produced by the oscillator circuit, thereby enabling transmission from the transmitting antenna as a radio wave beam. The oscillator circuit utilizes a Gunn diode or a transistor, and is a high frequency circuit for producing a high frequency signal with a predetermined frequency and electrical power. In light of the requirement to reduce the radio wave sensor's power consumption, it is preferable to produce the desired high frequency signal using a FET (field effect transistor) together with a dielectric resonator. By inputting a predetermined DC source voltage into the oscillator circuit via a constant voltage output circuit (e.g., a DC/DC converter or a zener diode), fluctuations in the frequency or power of the high frequency signal produced in the oscillator circuit by changes in the DC supply voltage impinging to the radio wave sensor, i.e. stoppage of oscillations, can be prevented in advance. The constant voltage output circuit and the oscillator circuit may be disposed on the same substrate, or may be separately provided. It is also acceptable to provide a filter circuit (e.g., a high-frequency capacitor electronic part or a filter line which can be directly formed on a substrate by copper foil etching) for efficiently passing high frequency signals produced by the oscillator circuit as needed, and for DC-isolating (insulating) the oscillator circuit side and the antenna electrode side, thereby enabling the high frequency signal to be propagated from the oscillator circuit to the antenna electrode.

In the radio wave sensor of the present invention, at least the receiving antenna to which the wave detecting element (the "diode" hereafter) is connected is a thin-film antenna electrode (the "receiving electrode" hereafter) formed on the other surface of the substrate; this is a microstrip antenna in which the ground electrode acts as a reflecting plate. One of either the cathode terminal or the anode terminal of the diode is either directly connected to the receiving electrode or is connected thereto via a frequency adjustment line; the other terminal of the diode is connected to the ground electrode.

To increase the directional gain of the radio wave beam transmitted from the radio wave sensor, disposing the transmission antenna and the receiving antenna in close proximity so that a portion of the high-frequency signal transmitted from the transmission antenna is turned back to the receiving antenna results in transmission of the high-frequency signal from the receiving antenna as well, so that the receiving antenna also plays the role of a transmission antenna. Depending on the phase difference between the transmission antenna and receiving antenna, there is thus a change in the directional characteristics or configuration (maximum radiation intensity direction, half-value angle) of the radio wave beam in which the high-frequency signal transmitted from the transmitting antenna and the high-frequency signal transmitted from the receiving antenna are integrated. It is therefore difficult to control the directional gain and directional characteristics or configuration (direction of maximum radiating intensity, half-value angle) without adjusting the space between the transmitting antenna and receiving antenna elements after first pre-controlling (adjusting) the resonant frequency (phase) of the receiving antenna to which the diode is connected.

In the radio wave sensor of the present invention, in a state whereby one of either the cathode terminal or the anode terminal of the diode is directly connected to the receiving electrode or is connected thereto via a frequency adjustment line, the shape of the receiving electrode or the length of the frequency adjustment line is adjusted so that the resonant frequency (phase) of the receiving electrode is approximately equal to (the same phase as) or slightly higher than (positive phase) the frequency of the high-frequency signal produced by the oscillator circuit. By disposing in a predetermined inter-element space around the receiving electrode a transmitting antenna (transmitting electrode) in which the resonant frequency is approximately equal to the frequency of the high-frequency signal produced by the oscillator circuit, an improvement can be achieved in the directional gain of the radio wave beam which integrates the high-frequency signal transmitted from the transmitting electrode and the high-frequency signal transmitted from the receiving electrode, and the electrical power of the high-frequency signal colliding with and reflected back by a detected object present in the detection area can be increased.

However, when the output line which externally outputs a detection signal detected by the diode is connected at a particular position on the receiving electrode or on the frequency adjustment line, i.e., a position on the receiving electrode or the frequency adjustment line at which the current of the high-frequency signal propagated on the receiving electrode or the frequency adjustment line is relatively large, there is a major effect from the inductance component or the capacitance component of the output line and the amplifier circuit, etc. connected to subsequent stages of the output line, thereby changing the resonant frequency of the receiving electrode. This makes control of the radio beam directional characteristics or configuration difficult, and receiving efficiency is reduced.

Therefore the output line is most preferably connected to a position on the receiving electrode and the frequency adjustment line where the current on the high-frequency signal propagated to the receiving electrode and the frequency adjustment line is at approximately maximum, i.e. where the electrical field produced during excitation of the receiving electrode and the frequency adjustment line is at approximately minimum. For example, in a square-shaped receiving electrode in which the direction of polarization is vertical polarization, given a length L of a side parallel to the direction of excitation of the receiving electrode, the output line should be connected at a position on the inside or on the edge of the receiving electrode 0.5 x L from the edge perpendicular to the direction of excitation of the receiving electrode (on the centerline of the receiving electrode perpendicular to the direction of excitation of the receiving electrode). For a circularly polarized receiving antenna, it is most preferable to connect the output line at a position approximately at the center of the receiving electrode. By so doing, no influence is imparted by the inductance component, the capacitance component, and the like on the output line or electrical circuits connected to subsequent stages of the output line, and there is virtually no change in the resonant frequency of the receiving electrode, therefore the radio beam can be radiated with a predetermined directional gain and directional configuration, and loss of receiving efficiency can be prevented.

When connecting an output line connected to the receiving electrode or the frequency adjustment line at a position on the receiving electrode or the frequency adjustment line where the current of the high-frequency signal propagated on the receiving electrode and the frequency adjustment line is at approximately maximum (electrical field is at approximately minimum), greater precision is required for the positioning of the output line connection as the frequency of the high-frequency signal increases. Therefore the narrower the line width of the output line, the better; for common substrate manufacturing methods based on copper foil etching, a line width of approximately 0.1 to 0.3 mm is reasonable. It is preferable that the length of the output line be a straight line and that the electrical length be longer than the half wavelength at the transmitted signal frequency. The output line may be disposed on the same side of the substrate as the receiving electrode or may be disposed, via conducting holes penetrating the substrate, either on a substrate surface different from the surface on which the receiving electrode is disposed, or internally in the substrate. A high-frequency wave blocking stub may be connected to the output line as needed in order to prevent the external output of a second-order spurious radiation (a frequency component which has twice the frequency of the high-frequency signal produced by the oscillator circuit).

When the diode is directly connected or connected via the frequency adjustment line to the receiving electrode such that its anode terminal is connected to the ground electrode and its cathode terminal is connected to the frequency adjustment line, the voltage value level of the detection signal output from the output line varies toward the positive voltage side, whereas when the anode terminal is connected to the frequency adjustment line and the cathode terminal is connected to the ground electrode, the voltage value level of the detection signal output from the output line varies toward the negative voltage side. Therefore connecting an amplifier circuit (constituted by an operational amplifier or the like, and a circuit of a voltage follower or circuit having the function of amplifying a signal by greater than a unitary multiple (a ratio of 1 to 1 for output versus input)) of a positive power supply or negative power supply, as needed, to a subsequent stage on the output line facilitates signal processing, improves anti-noise characteristics of the radio wave sensor, and suppresses voltage value fluctuations in the detection signal externally output from the output line (dark noise). A filter circuit for extracting only the required frequency component may also be inserted as needed either before or after the amplifier circuit.

By adjusting the length of the frequency adjustment line so that the electrical length of the propagation path over which the high-frequency signal is propagated, from the point connecting the receiving electrode and the frequency adjustment line to the ground electrode via the diode, becomes an odd numbered multiple of the 1/4 wavelength at the frequency of the transmitted high-frequency signal (λg/4: λg is the wavelength of the high frequency signal propagated on the substrate. Assuming a radio wavelength of λ for a high frequency signal in a vacuum, and a substrate relative permittivity of εr, λ = εr^{1/2} x λg), and all high-frequency signals passing through the wave detecting element via the receiving electrode will be totally reflected. The propagation path over which the high-frequency signal is propagated from the point connecting the receiving electrode and the frequency adjustment line to the ground electrode via the diode becomes a high-frequency circuit, resonating at the frequency of the transmitted high-frequency signal. The high-frequency signal received by the receiving electrode can therefore be efficiently detected by the diode, and dark noise in the detected signal output from the diode can be minimized, thereby providing a relatively high S/N ratio. In particular, by setting the length of the frequency adjustment line such that the electrical length from the point connecting the receiving electrode and the frequency adjustment line to the ground electrode via the diode is, at a minimum, λg/4 at the frequency of the transmitted high-frequency signal, propagation losses to the high-frequency signal caused by the frequency adjustment line can be minimized so that wave detection efficiency is at a maximum and the highest S/N ratio can be obtained.

When the radio wave sensor is provided with a transmitting/receiving electrode for transmitting and receiving a high-frequency signal as a radio beam, applying the same circuit configuration (diode, output line, etc.) as that connected to the receiving electrode described above to the transmitting/receiving electrode and, for example, connecting the detecting element (diode) to the transmitting/receiving electrode via the frequency adjustment line and connecting the output line at a position on the transmitting/receiving electrode at which the current of the high frequency signal propagated on the transmitting/receiving electrode is approximately at a maximum (electric field is at a minimum) enables the high frequency signal to be efficiently transmitted and received as a radio beam from the transmitting/receiving electrode, and the operational effects described above to be obtained.

When transmitting and receiving a high-frequency signal as a radio beam from the radio wave sensor, it is necessary to provide an antenna electrode (a transmitting electrode) for transmitting the radio beam, and an antenna electrode (a receiving electrode) for receiving the radio beam, with the substrate. Here, "transmitting electrode" refers to an antenna electrode to which a high-frequency signal produced by an oscillator circuit is directly supplied via a signal transmission means such as a transmission line or the like; "receiving electrode" refers to an antenna electrode to which a high-frequency signal is not directly supplied. When a radio beam is transmitted or received, the transmission electrode and the receiving electrode do not necessarily have to be separately provided on the substrate. Here, the term "transmitting/receiving electrode" refers to an antenna electrode whereby, in an antenna electrode connected to an oscillator circuit via a signal transmission means, a wave detecting element is connected on the propagation path over which the high-frequency signal is propagated, and both transmission and receiving of the radio wave beam are performed by the antenna electrode.

The position of the receiving electrode connected to one of either of the diode terminals or the frequency adjustment line varies depending on the shape of the receiving electrode, i.e. the direction of polarization, but if that position is other than that at which the current of the high-frequency signal flowing on the receiving electrode is approximately maximum (electrical field is approximately minimum), then one of either terminals of the diode or the frequency adjustment line can be connected at any desired position on the receiving electrode. In particular, it is preferable that these be connected at a position on the receiving electrode at which the electrical field generated by excitation of the receiving electrode be at approximately maximum. For example, if a receiving electrode has a square shape whereby its polarization direction is approximately vertical polarization, then given a length W for the edge perpendicular to the direction of excitation of the receiving electrode, it is preferable to connect one of the diode terminals or the frequency adjustment line to a position 0.5 x W from the edge parallel to the direction of polarization of the receiving electrode (on the centerline of the receiving electrode parallel to the direction of excitation of the receiving electrode), and excluding the approximately center portion of the receiving electrode at which the current of the high-frequency signal flowing on the receiving electrode is at approximately its maximum (electrical field is at approximately minimum); by so doing, bias in the detection area (on the side parallel in the direction of excitation) can be suppressed. The diode and frequency adjustment line may also be disposed on the same side of the substrate as the receiving electrode, and may be disposed either on a substrate surface different from the surface on which the receiving electrode is disposed, or internally within the substrate, connecting the receiving electrode via a conducting hole penetrating the substrate.

The same operational effect can be obtained by applying the same circuit configuration (a diode or output line, voltage adjustment line, or the like), connected to the receiving electrode described above, to the transmitting/receiving electrode (the antenna electrode) to which the oscillator circuit is connected, and which transmits and receives a high frequency signal on a single antenna. From the standpoint of maximizing the electrical power of the high-frequency signal radiated from the transmitting/receiving electrode, one of the terminals of the diode or the frequency adjustment line must be connected to an appropriate position on the transmitting/receiving electrode. For example, if a frequency adjustment line with a line width having a 50Ω impedance is connected to the transmitting/receiving electrode match point (the location at which impedance is 50Ω at the high-frequency signal frequency), the transmitting/receiving electrode will serve the role of bandpass filter so that the electrical power of the high-frequency signal input to the diode increases and the electrical power of the high-frequency signal transmitted from the transmitting/receiving electrode decreases. It is therefore preferable that one terminal of the diode or the frequency adjustment line be connected at a position on the transmitting/receiving electrode with an impedance different from the impedance on that one terminal of the diode or on one end of the frequency adjustment line connected to the transmitting/receiving electrode. Maximum electrical power in the high-frequency signal radiated from the transmitting/receiving electrode can be obtained by purposely forming an impedance mismatch at the connection point between the transmitting/receiving electrode and the diode (the wave detecting element) or at the connection point between the transmitting/receiving electrode and the frequency adjustment line. Because the transmitting/receiving electrode acts as a bandpass filter, it exerts no influence on the oscillator circuit. A similar operational effect can also be achieved using a similar circuit structure when the transmitting electrode and the receiving electrode are separately disposed on the same substrate and one terminal of the diode is connected directly or via the frequency adjustment line to the transmitting/receiving electrode.

Due to the connection in the radio wave sensor of the present invention of one terminal of the diode, either directly or via the frequency adjustment line, to the antenna electrode for receiving the high-frequency signal (the receiving electrode), and the other terminal of the diode to the ground electrode, wave detection can be accomplished by the diode with virtually no losses to the high-frequency signal (high-frequency electrical power) received by the receiving electrode. Within the radio wave sensor detection area there is an area in an interval equal to the 1/2 wavelength (λ/2) of the frequency of the high-frequency signal transmitted from the transmitting antenna (transmitting electrode) in which the electrical power distribution continuously changes from minimum to maximum and from maximum to minimum. Since the electrical power of the high-frequency signal received on the receiving electrode continuously varies with the presence or movement of a detected object in the detection area, a frequency component (wave) appears on the detection signal detected and output by the diode. The detection characteristics of the diode element itself (the DC voltage value output from the diode relative to the high-frequency electrical power input to the diode) therefore greatly affects the detection functionality of the radio wave sensor. The DC voltage value of the detection signal detected and output by the diode increases when the electrical power of the high-frequency signal input to the diode increases.

When a high-frequency signal is transmitted or received as a radio beam on a single antenna, or when a transmission antenna for transmitting a high-frequency signal and a receiving antenna for receiving a high-frequency signal are placed in close proximity, a high-frequency signal produced by the oscillator circuit will be input, either directly or indirectly, to the diode even if there is no detected object present in the detection area. This causes the electrical power of the high-frequency signal input to the diode to become excessive, so that when a DC voltage greater than the DC power supply voltage applied to the radio wave sensor (the amplifier circuit) is output from the diode, the voltage level of the detection signal output from the radio wave sensor will be the same as the DC power supply voltage even if the electrical power of the high-frequency signal received by the radio wave sensor changes when a detected object inside the detection area is present or moves, and no frequency component will appear.

The radio wave sensor of the present invention is provided with a resistor, one terminal of which is connected to a ground electrode, serving as a voltage adjustment means for adjusting the voltage of the detection signal output from the diode; the other terminal of the resistor is connected to either a receiving electrode or a frequency adjustment line.

By adjusting the resistance value of the resistor and optimizing the voltage of the detection signal output from the diode in a state in which there is no detected object in the detection area of the radio wave sensor, a frequency component (wave) will appear on the detection signal output from the radio wave sensor when a detected object is present or moves within the detection area, even if the DC power supply voltage applied to the radio wave sensor is decreased in order to reduce electrical power consumption. The mobile state of the detected object (moving speed and relative moving distance) can be easily discerned from the frequency of the detection signal (period => time) and the frequency of the high-frequency signal transmitted from the transmitting electrode (wavelength => distance).

It is most preferable that, as in the above-described output line, the other terminal of the resistor be connected at a particular position on the receiving electrode or the frequency adjustment line, i.e. that it be connected at a position on the receiving electrode or the frequency adjustment line at which the current of the high-frequency signal propagated on the receiving electrode or the frequency adjustment line is at a maximum (the electrical field is at a minimum). It is therefore preferable when the high-frequency signal frequency is high to connect the other terminal of the resistor to the receiving electrode or the frequency adjustment line via a connecting line having a line width of approximately 0.1 to 0.3 mm, rather than directly connecting it to the receiving electrode or the frequency adjustment line. The output line can thus also serve as a connecting line. The resistor, connecting line, and the like may also be disposed on the same side of the substrate as the receiving electrode, and may be disposed either on a substrate surface different from the surface on which the receiving electrode is disposed, or internally within the substrate, connecting the receiving electrode via a conducting hole penetrating the substrate.

We have described above the operational effect of a radio sensor provided with a transmission antenna (transmission electrode) for transmitting a high-frequency signal and a separate receiving antenna (receiving electric) for receiving a high frequency signal, but a similar operational effect can be obtained by applying a similar circuit configuration (a diode, output line, voltage adjustment line, or the like), connected to a receiving electrode, to a transmitting/receiving antenna (transmitting/receiving electrode), such that the high-frequency signal is transmitted and received on a single antenna.

The operational effect described above can be obtained with a radio wave sensor furnished with at least a receiving antenna for receiving a high-frequency signal, in which a detection element for detecting a high frequency signal is directly connected or is connected via a frequency adjustment line to this receiving antenna.

Connecting the oscillator circuit and the diode through the antenna electrode causes the antenna to function as a buffer, so that even if changes in diode (band) pass characteristics or reflection characteristics at the diode input terminal arise due to variability in capacitance or connection position of the diode, changes in the high-frequency signal frequency or electrical power produced by the oscillator circuit can be suppressed.

Below, referring to diagrams, we discuss a radio wave sensor in an embodiment of the present invention.

Note that for purposes of explanation the thickness of the substrate and the dimensions of the wiring pattern in the embodiment diagram differ from the actual shape.

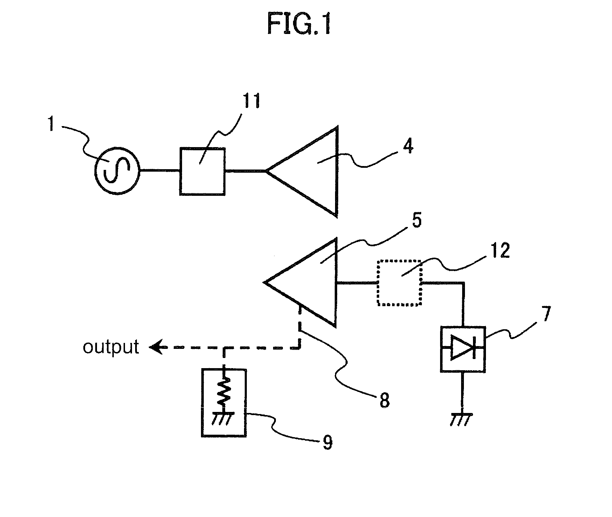

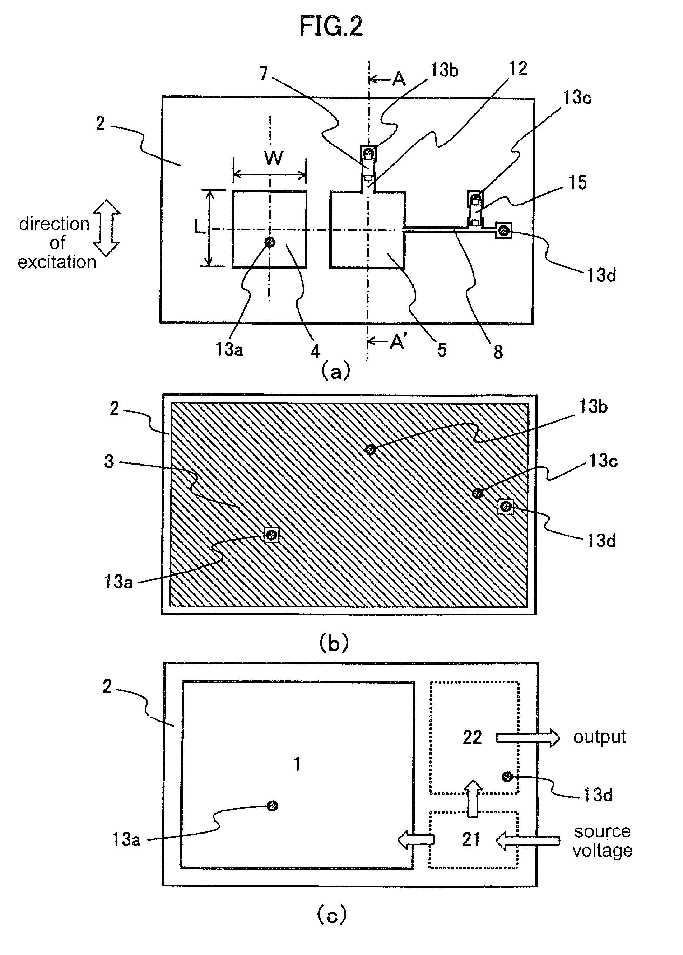

Fig. 1 is a circuit diagram of a radio wave sensor according to a first embodiment of the present invention. Fig. 2 is (a) a front elevation diagram, (b) a perspective diagram of the interior seen from the front side, and (c) a perspective diagram of the rear surface portion seen from the front side of the radio wave sensor.

The radio wave sensor shown in Fig. 2 is provided with a constant voltage output circuit 21, an oscillator circuit 1, and an amplifier circuit 22 on one surface of the substrate on which a ground electrode 3 acting as a high-frequency signal ground is formed over the entire surface of the interior; and is provided on the other surface with a thin-film rectangular transmitting electrode 4 for transmitting a high-frequency signal, a thin-film rectangular receiving electrode 5 for receiving a high-frequency signal, a diode 7 for detecting a high-frequency signal, an output line 8 for externally outputting the results detected by the diode 7, and a voltage adjustment line 9 for adjusting the voltage of the detection signal output from the diode 7.

The high frequency signal produced by the oscillator circuit 1 is propagated to the transmitting electrode 4 via a conducting hole 13a (which does not conduct to the ground electrode 3) which is formed on the matching point (the point where the impedance is 50Ω at the high frequency signal frequency) inside the transmitting electrode 4 on the other surface of the substrate 2, and penetrates the substrate 2. The high-frequency signal is transmitted as a radio beam forward from the transmitting electrode 4 (toward the side on which the transmitting electrode 4 is disposed relative to the ground electrode 3 side). At this point, the transmitting electrode 4 and the receiving electrode 5 are formed in close proximity on the same surface of the substrate 2 in order to achieve directional gain and smaller size for the radio wave sensor, therefore a portion of the high-frequency signal transmitted from the transmitting electrode 4 turns back into the receiving electrode 5 so that the receiving electrode 5 is excited. As a result, the high-frequency signal is also transmitted from the receiving electrode 5.

The transmitting electrode 4 and the receiving electrode 5 are microstrip antennas and approximately square-shaped thin film electrodes with a length L on at least one side of approximately 1/2 the wavelength (λg/2) of the high-frequency signal on the substrate 2; both the transmitting electrode 4 and the receiving electrode 5 have a vertically polarized excitation structure, and the ground electrode 3 is acting as a reflection plate. Given a length L for the transmitting electrode 4 edge parallel to the direction of excitation, the length of one side of the ground electrode 3 parallel to the excitation direction of the transmitting electrode 4 is L x 3, and as a reference for the wavelength determined by the frequency of the high-frequency signal (produced by the oscillator circuit 1) propagated on the substrate 2, it has a length corresponding to an odd-numbered multiple of approximately 1/2 the wavelength.

The shapes of the transmitting electrode 4 and the receiving electrode 5 (the L dimension and the W dimension) are identical; the shape is adjusted so that resonance (excitation) occurs at the frequency of the high-frequency signal produced by the oscillator circuit. Resonance here refers to the state whereby in the reflection characteristics of the transmitting electrode 4, the receiving electrode 5, etc., a high frequency signal frequency is present in a frequency bandwidth wherein the respective resonance points are at or below -10 dB. Either the anode or the cathode terminal of the diode 7 is connected to the receiving electrode 5 via the frequency adjustment line 12, and the other terminal of the diode 7 is connected to the ground electrode 3 via a conducting hole 13b. Needless to say, since the length (the thickness of the substrate 2) of the conducting hole 13b itself affects the resonant frequency of the receiving electrode 5 as the frequency of the high-frequency signal increases, the conducting hole 13b may also be viewed as a frequency adjustment line.

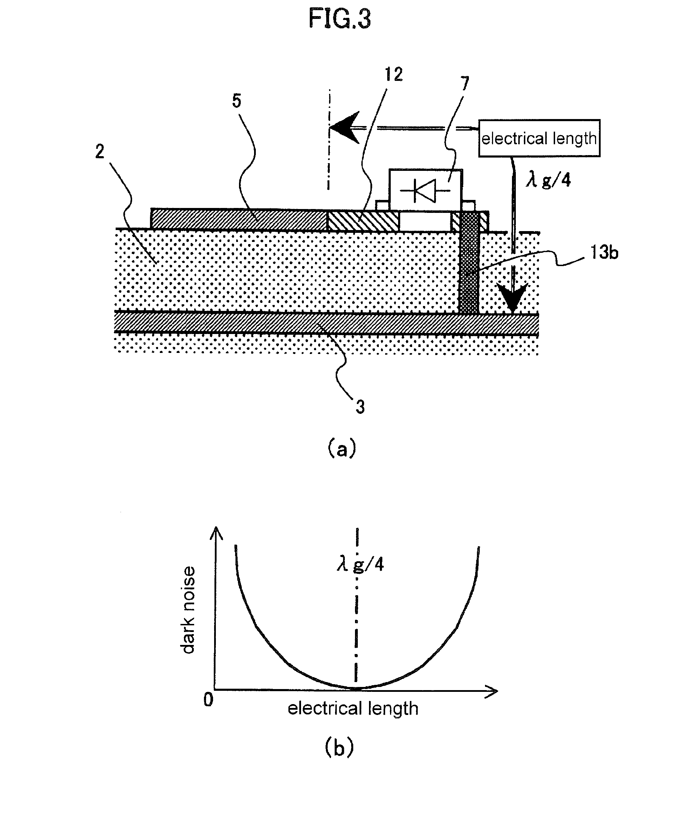

As shown in Fig. 3, in a state whereby the diode 7 is connected to the receiving electrode 5 via the frequency adjustment line 12, the length of the frequency adjustment line 12 is set so that the electrical length of the propagation path over which the high-frequency signal is propagated, from the point connecting the receiving electrode 5 with the frequency adjustment line 12 through the diode 7 to the ground electrode 3, is an odd-numbered multiple of the 1/4 wavelength (λg/4) at the frequency of the transmitted high-frequency signal. By setting it in this manner, the propagation path over which the high-frequency signal is propagated from the point connecting the receiving electrode 5 with the frequency adjustment line 12 via the diode 7 to the ground electrode 3 becomes a high-frequency circuit, resonating at the frequency of the transmitted high-frequency signal. The high-frequency signal received by the receiving electrode 5 can therefore be efficiently detected by the diode 7, and the dark noise of the detected signal output from the diode 7 can be minimized, thereby providing a relatively high S/N ratio. In particular, by setting the length of the frequency adjustment line 12 such that the electrical length from the point connecting the receiving electrode 5 with the frequency adjustment line 12 via the diode 7 to the ground electrode 3 is at the minimum λg/4 at the frequency of the transmitted high-frequency signal, propagation losses to the high-frequency signal caused by the frequency adjustment line 12 can be minimized so that wave detection efficiency is at a maximum and an even higher S/N ratio can be obtained.

However, when the output line 8, which externally outputs the detection signal detected by the diode 7, is connected either to the receiving electrode 5 where the current of the high-frequency signal propagated on the receiving electrode 5 and the frequency adjustment line 12 is relatively large, or to a position on the frequency adjustment line 12, there is a major effect from the inductance component and the capacitance component of the output line 8 and the amplifier circuit, etc. connected to subsequent stages of the output line 8, thereby changing the resonant frequency of the receiving electrode 5. As a result, control of radio beam directional configuration becomes difficult, and receiving efficiency is reduced.

In the radio sensor shown in Fig. 2, the output line 8 for externally outputting the results detected by the diode 7 is connected to approximately the center portion of the edge of the receiving electrode 5 parallel to the direction of excitation (i.e. at a position 0.5 x L from the edge perpendicular to the direction of excitation of the receiving electrode 5 (L: length of the edge parallel to the direction of excitation)) at which the current of the high-frequency signal propagated on the receiving electrode 5 when the receiving electrode 5 is excited is approximately at its maximum (the electrical field is approximately a minimum), and the receiving electrode 5 is connected to the amplifier circuit 22 via the output line 8 and the conducting hole 13d formed thereafter, which penetrates the substrate 2. Therefore in the radio wave sensor of the present embodiment, the state of the high-frequency signal propagated on the receiving electrode 5 is hardly changed, so there is almost no effect on the resonant frequency of the receiving electrode 5. Thus the radio beam can be radiated at a predetermined directional gain and directional configuration, and loss of receiving efficiency can be prevented.

When the shape of the receiving electrode 5 is rectangular (vertical polarization), it is most appropriate to connect the output line 8 to the center portion of the edge parallel to the direction of excitation of the receiving electrode 5, however there will be no extreme change in the state of the high-frequency signal propagated on the receiving electrode 5 even if the output line 8 is connected at an optional position on a side parallel to the direction of excitation of the receiving electrode 5 (other than the positions adjacent to the crossing points with the edge perpendicular to the direction of excitation of the receiving electrode 5), therefore the change in the resonant frequency of the receiving electrode 5 will be miniscule. So long as the radio beam can thus be radiated at a desired directional gain and directional configuration and the desired receiving efficiency can be obtained, the output line 8 can be connected at any optional position on an edge parallel to the direction of excitation of the receiving electrode 5. If the receiving electrode 5 is rectangular, the receiving electrode 5 and the output line 8 can be simultaneously formed on the same surface of the substrate 2 using a copper foil etching method, and the output line 8 can be accurately connected to a predetermined position on an edge parallel to the direction of excitation of the receiving electrode 5.

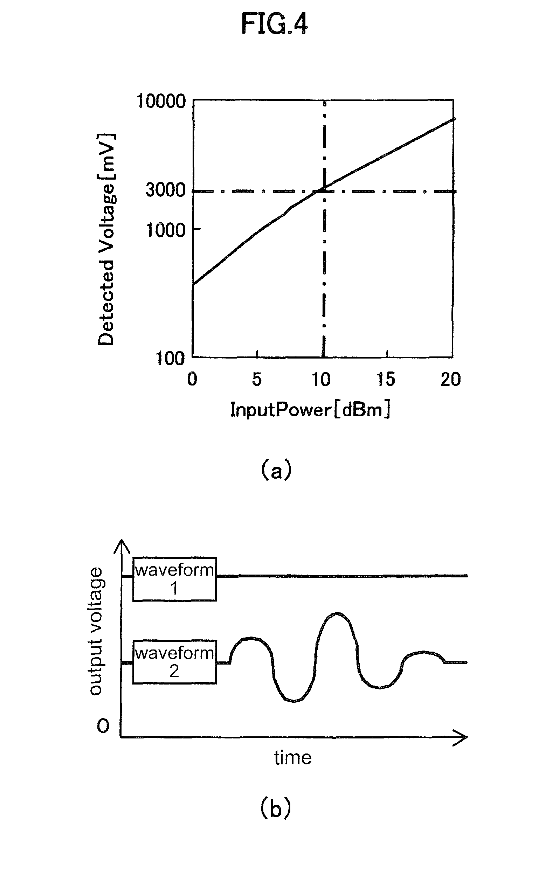

Thus in the state whereby one of either the cathode terminal or the anode terminal of the diode is either directly connected to the receiving electrode 5 or is connected thereto via a frequency adjustment line 12, and the other terminal thereof is connected to the ground electrode, the radio sensor shown in Fig. 2 is a resonant circuit. Therefore in the radial sensor of the present embodiment, the high-frequency signal (high-frequency power) received by the receiving electrode 5 can be input to the diode 7 with virtually no loss, and efficient detection can be achieved. Detection performance of the radio wave sensor of the present embodiment is hence greatly affected by the wave detection performance (the DC voltage value output from the diode versus high-frequency power input to the diode) of the diode element itself, as shown in Fig. 4(a), so the DC voltage value of the detection signal detected and output by the diode increases when the power of the high-frequency signal input to the diode increases.

On the other hand, if the transmitting antenna 4 (the transmitting electrode) and the receiving antenna 5 (the receiving electrode) are disposed facing one another or in close proximity, and there is no detected object present in the detection area, the high-frequency signal transmitted from the transmission antenna 4 will be input through a space to the receiving antenna 5, then input to the diode 7 connected to the receiving antenna 5. This causes the electrical power of the high-frequency signal input to the diode 7 to become excessive, raising the risk that the diode 7 will output a DC voltage greater than the DC power supply voltage applied to the radio wave sensor (the amplifier circuit). In such circumstances, as shown by the waveform 1 in Fig. 4(b), the voltage level of the detection signal output from the radio wave sensor will be the same as the DC power supply voltage even if the electrical power of the high-frequency signal received on the antenna 5 changes when a detected object inside the detection area is present or moves, and no frequency component will appear.

In the radio wave sensor shown in Fig. 2, a resistor 15 is connected along the path of the output line 8 connected to the edge parallel to the direction of excitation of the receiving electrode 5 to adjust the voltage value of the detection signal output from the diode 7. One terminal of the resistor 15 is connected to the ground electrode 3 via the conducting hole 13c, and the other terminal thereof is connected to the output line 8. Therefore since there is almost no change made in the state of the high-frequency signal propagated on the receiving electrode 5, the voltage value of the detection signal output from the diode 7 can be adjusted in the radio wave sensor of the present embodiment virtually without affecting the resonant frequency of the receiving electrode 5. Therefore adjusting the resistance value of the resistor 15 and optimizing the voltage of the detection signal output from the diode 7 when there is no detected object in the detection area of the radio wave sensor causes a frequency component (wave) to appear on the detection signal output from the radio wave sensor, as shown by Waveform 2 in Fig. 4(b), when a detected object is present or moves within the detection area, even if the DC power supply voltage applied to the radio wave sensor is decreased to reduce electrical power consumption. Thus in the radio wave sensor of the present embodiment, the mobile state of the detected object (moving speed and relative moving distance) can be easily discerned from the frequency of the detection signal (period => time) and the frequency of the high-frequency signal transmitted from the transmitting electrode (wavelength => distance).

Note that when the receiving electrode 5 and the resistor 15 are both disposed on the same surface of the substrate 2, it is preferable to dispose the resistor 15 in a position separated by λg/2 or greater from the edge of the receiving electrode 5 in order to prevent mutual interference.

In the radio wave sensor shown in Fig. 2, the transmitting electrode 4 and the receiving electrode 5 are disposed in proximity to one another, therefore the resonant frequencies of both the transmitting electrode 4 and the receiving electrode 5 are shifted toward the higher side due to mutual interference between the elements. As a result, although the power of the high-frequency signal radiated from the radio wave sensor declines somewhat, directional gain increases. Therefore in the radio wave sensor of the present embodiment, when a detected object is present or moves within the detection area set by the half-value angle, a high level of electrical power from the high-frequency signal hitting the detected object and reflecting back can be obtained, and efficient detection can be accomplished using the diode 7 connected to the receiving electrode 5. Turning to the application of the radio wave sensor of the present embodiment in residential equipment, the sensor is suited for detecting the movement of detected objects in a particular direction within a relatively small space, and is appropriate for detecting persons approaching a urinal or toilet, as well as their excreted urine, or for detecting a hand approaching a faucet or a person approaching a warm water cleansing toilet seat.

In the present embodiment, the oscillator circuit 1 is provided on one surface of a so-called multilayer substrate 2, inside of which, over approximately the entire surface, the ground electrode 3 is formed; the transmitting electrode 4 and the receiving electrode 5 are provided on the other surface thereof, but it is also acceptable for the ground electrode 3 to be formed on approximately one entire surface of a single layer substrate 2, and the oscillator circuit 1, the transmitting electrode 4 and the receiving electrode 5 to be formed on the other surface thereof.

Also, in the present embodiment the receiving electrode 5, in which the length of the frequency adjustment line 12 is adjusted so that the resonant frequency of the receiving electrode 5 with the diode 7, the output line 8, and the like connected thereto is approximately the same as the frequency of the high-frequency signal produced in the oscillator circuit 1, is disposed in a predetermined inter-element space around the transmitting electrode 4. Without limitation to such a configuration, however, the receiving electrode 5, in which the length of the frequency adjustment line 12 is adjusted so that the resonant frequency of the receiving electrode 5 with the diode 7, the output line 8, and the like are connected thereto is higher than the frequency of the high frequency signal produced by the oscillator circuit 1 (positive phase), may be disposed around the transmission electrode 4 by providing inter-element space such that the directional gain of the integrated radio beam is approximately at a maximum. In this instance, because the electrical length from the connection point between the receiving electrode 5 and the frequency adjustment line 12 via the diode 7 to the ground electrode 3 deviates from λg/4, dark noise in the detection signal externally output via the output line 8 tends to increase slightly. However, this type of modification allows the electrical power and directional gain of the high frequency signal radiated from the radio wave sensor to be increased, thereby reducing the power consumed and the size of the radio wave sensor.

With respect to the transmitting electrode 4 and the receiving electrode 5, it is not necessarily required that the transmitting electrode 4 and the receiving electrode 5 be disposed on the same plane so that the edge of the transmitting electrode 4 parallel to the direction of excitation faces the edge of the receiving electrode 5 parallel to the direction of excitation. The edge of the transmitting electrode 4 perpendicular to the direction of excitation may be disposed to face the edge of the receiving electrode 5 perpendicular to the direction of excitation, or a portion of the edge of the receiving electrode 5 may be disposed to face a portion of the edge of the receiving electrode 5. By so doing, turning back of the high frequency signal from the transmitting electrode 4 to the receiving electrode 5 can be suppressed, dark noise in the detection signal output from the output line 8 connected to the receiving electrode 5 can be reduced, and the S/N ratio can be improved.

The transmitting electrode 4 and the receiving electrode 5 do not necessarily have to be disposed in mutual proximity. The transmitting electrode 4 and the receiving electrode 5 may be disposed on the same surface of the substrate so that the distance from the centerpoint of the transmitting electrode 4 to the centerpoint of the receiving electrode 5 is one wavelength (1 λg) or greater in accordance with desired detection performance. Disposition in this manner reduces the degree of mutual interference, so that while the directional gain of the integrated radio beam is low, the electrical power of the high frequency signal radiated from the radio wave sensor can be increased compared to the case when the transmitting electrode 4 and the receiving electrode 5 are disposed in mutual proximity.

It is also not necessarily required that the transmitting electrode 4 and the receiving electrode 5 be coplanar. The transmitting electrode 4 and the receiving electrode 5 can be disposed on separate substrates or on the same substrate in accordance with desired detection performance, and the positional relationship between the transmitting electrode 4 and the receiving electrode 5 can be freely determined. For example, if the excitation surface of the receiving electrode 5 is disposed parallel to the rear side (opposite to the direction in which the radio beam is radiated) relative to the excitation surface of the transmitting electrode 4, bending back of the high frequency signal from the transmitting electrode 4 to the receiving electrode 5 can be suppressed, dark noise in the detection signal output from the output line 8 connected to the receiving electrode 5 can be reduced, and the S/N ratio can be further improved.

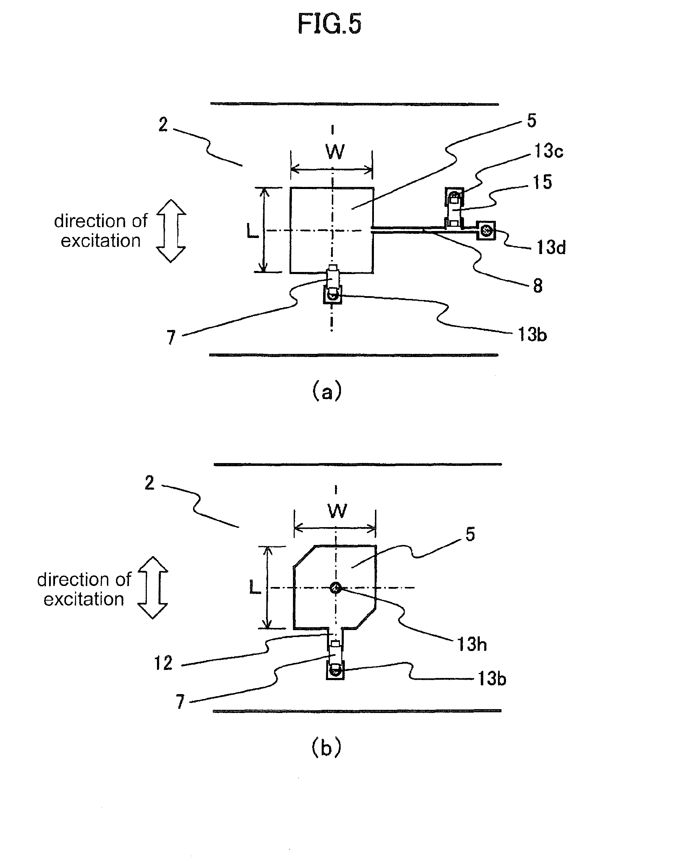

It is not necessarily required that the diode 7 be connected to the receiving electrode 5 via the frequency adjustment line 12. For example, as shown in Variation 1 in Fig. 5(a), either one of the cathode or anode terminals of the diode 7 may be directly connected to the receiving electrode 5, and the other terminal connected to a ground electrode 3, not shown. If one of the terminals of the diode 7 is directly connected to the receiving electrode 5 and the other terminal is connected to a ground electrode 3 (not shown) via the conducting hole 13b which penetrates the substrate 2 from one surface to the other surface, the dimension L (length of the edge parallel to the direction of excitation) and dimension W (length of the edge perpendicular to the direction of excitation) are adjusted so that the resonant frequency of the receiving electrode 5 is a desired frequency, thus enabling the above-described operational effects to be obtained.

With respect to the radio wave sensor shown in the variation below, only a front elevation is shown for the side of the receiving electrode 5 which forms the major part of the present invention, but its circuit configuration is similar to the radio wave sensor shown in Fig. 2.

The connection position of the output line 8 connected to the receiving electrode 5 differs depending on the shape of the receiving electrode 5. The radio wave sensor shown in Fig. 2 is furnished with a rectangular receiving electrode 5 and this receiving electrode 5 is an antenna suited for efficient reception of a vertically polarized radio beam; whereas the radio wave sensor shown in the Fig. 5(b) variation is furnished with a rectangular receiving electrode 5 from which the upper left and lower right corners in the figure are cut off and this receiving electrode 5 is an antenna suited for efficiently receiving a circularly polarized radio beam. The transmitting electrode 4 (not shown) has the same shape as the receiving electrode 5.

In the vertically polarized receiving electrode 5 (Fig. 2), high-frequency signal current concentrates on one of the pairs of facing electrode edges, whereas in the circularly polarized receiving electrode 5 (Fig. 5(b)), high-frequency current concentrates in the outer perimeter of the electrode 5. Connecting the output line 8 or the resistor 15 to the outer perimeter of the circularly polarized receiving electrode 5 therefore greatly affects the resonant frequency of the receiving electrode 5, causing receiving efficiency to decline. In the radio wave sensor shown in Variation 2, a conducting hole 13h penetrating the substrate 2 is formed at approximately the center portion of the receiving electrode 5, where the current of the high-frequency signal propagated on the receiving electrode 5 is approximately maximum (the electrical field is approximately minimum). The receiving electrode 5 is connected via the conducting hole 13h to the output line 8 (not shown) formed on a surface different from that on which the receiving electrode 5 is formed. Furthermore, a resistor 15 (not shown) is connected to the output line 8 (not shown). The resistor 15 is connected on one terminal to the ground electrode 3 (not shown) and on the other terminal to the output line 8. Therefore in the radio wave sensor in Variation 2 there is no effect imparted on the high-frequency signal propagated on the receiving electrode 5, and the previously described operational effects are obtained. In other words, if the output line 8 is DC coupled to the receiving electrode 5 and the output line 8 is connected to a position on the receiving electrode 5 where the current of the high frequency signal propagated on the receiving electrode 5 is at approximately a maximum (the electrical field is at approximately a minimum), then no effect is imparted on the state of the high-frequency signal propagated on the receiving electrode 5, so the previously described operational effects are obtained.

Although, in the radio wave sensor of Fig. 2, to adjust the voltage value of the detection signal output from the diode 7, the resistor 15 is connected along the path of the output line 8 connected to an edge parallel to the direction of excitation of the receiving electrode 5, and one terminal of the resistor 15 is connected to the ground electrode 3 via the connecting hole 13c while the other terminal is connected to the output line 8, the resistor 15 does not necessarily have to be connected to the output line 8. For example, it is acceptable to connect a connecting line having a line width of 0.1 to 0.3 mm to approximately the center portion of the edge facing the edge of the receiving electrode 5 to which the output line 8 is connected, and to connect the other terminal of the resistor 15 to that connecting line. In other words, if the output line 8 is DC coupled to the receiving electrode 5 and the output line 8 is connected to a position on the receiving electrode 5 where the current of the high frequency signal propagated on the receiving electrode 5 is at approximately a maximum (the electrical field is at approximately a minimum), the resistor 15 may be connected to the receiving electrode 5, either directly or via a connecting line. In such instances, one terminal of the resistor 15 is connected to the ground electrode 3, and the other terminal is connected to the receiving electrode 5 either directly or via a connecting line. The voltage of the detection signal output from the diode 7 can be adjusted using such a configuration, and the previously described operational effects can be obtained.

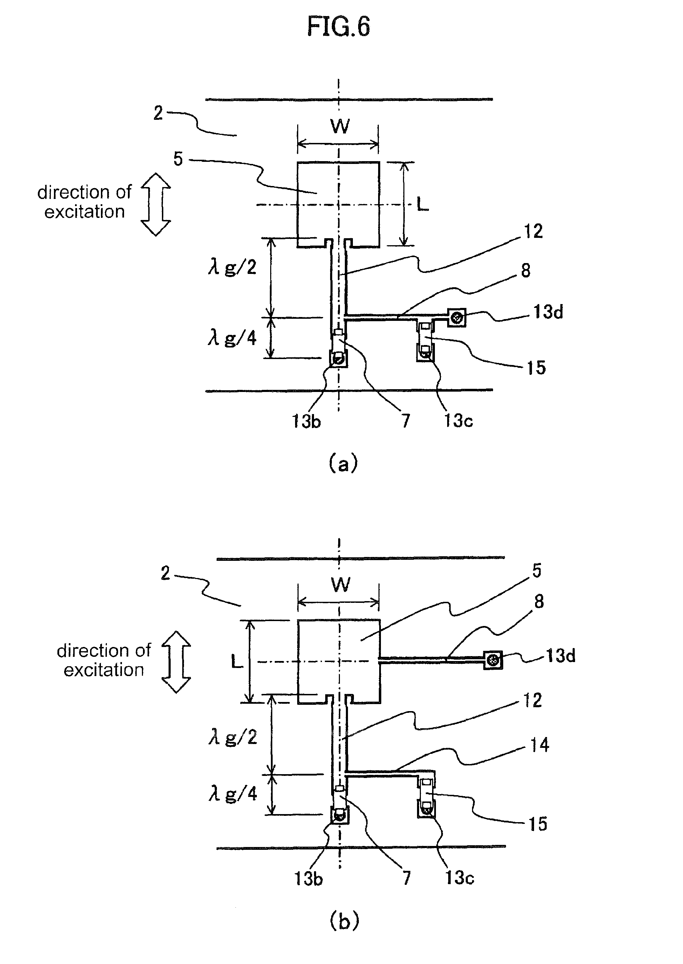

In the radio wave sensor shown in Variation 3 in Fig. 6(a), a frequency adjustment line 12 with a 50Ω impedance line width is connected at a position different from the match point of the receiving electrode 5 (the location at which impedance is approximately 50Ω at the frequency of the high-frequency signal). The electrical length from the point connecting the receiving electrode 5 with the frequency adjustment line 12, via the diode 7 and the conducting hole 13b, to the ground electrode 3 (not shown) is 3/4 wavelength (λg/2+λg/4). The output line 8 is connected at a position whereby the electrical length from the point connecting the receiving electrode 5 with the frequency adjustment line 12 is 1/2 wavelength (λg/2), i.e., at the position where the current of the high-frequency signal propagated on the frequency adjustment line 12 is approximately maximum (electrical field is approximately minimum).

Since the resonant frequency of the receiving electrode 5 is set to be the same as the frequency of the high-frequency signal, and the high-frequency signal received on the receiving electrode 5 can be input to either one of the terminals of the diode 7 via the relatively short frequency adjustment line 12, the high-frequency signal received by the receiving electrode 5 can be efficiently detected. The propagation path propagating the high-frequency signal from the point connecting the receiving electrode 5 with the frequency adjustment line 12, via the diode 7 and the conducting hole 13b, to the ground electrode 3 (not shown) is a resonance circuit. In the present embodiment however, the output line 8 connected to the frequency adjustment line 12 does not affect the resonance state thereof, therefore dark noise can be minimized. Furthermore, because the voltage value of the detected signal output from the diode 7 can be adjusted using the resistor 15, detection efficiency is improved.

In the radio wave sensor shown in Variation 3, in order to adjust the voltage of the detection signal output from the diode 7 the resistor 15 is connected along the path of the output line 8 connected to the frequency adjustment line 12, and one terminal of the resistor 15 is connected to the ground electrode 3 via the connecting hole 13c, while the other terminal is connected to the output line 8. However, it is not necessarily required that the resistor 15 be connected to the output line 8. In the radio wave sensor shown in Variation 4 of Fig. 6(b), the previously described operational effect is obtained even if the output line 8 is connected at approximately the center portion of the edge parallel to the direction of excitation of the receiving electrode 5, and the resistor 15 is connected via the connecting line 14 to the frequency adjustment line 12.

The propagation path propagating the high-frequency signal from the point connecting the receiving electrode 5 with the frequency adjustment line 12, via the diode 7, to the ground electrode 3 also acts as an antenna. Therefore when the frequency adjustment line 12 is formed on the same plane as the receiving electrode 5, and the diode 7 is connected to the frequency adjustment line 12, some effect is imparted on the directionality (detection area) with which the high-frequency signal is received. Therefore directionality can be easily controlled by placement around the transmitting electrode 4 or the receiving electrode 5 of a directional control antenna (directional control electrode) to mitigate this effect. The shape of the directional control electrode may be freely set. For example, directional bias can be suppressed by placing a directional control electrode with the same resonant frequency as the receiving electrode 5 in a position symmetrical to that of the receiving electrode 5, centered on the transmitting electrode 4.

When forming the frequency adjustment line 12 on the same plane as the rectangular receiving electrode 5 using a copper foil etching method, it is preferable from the standpoint of avoiding a reduction in receiving efficiency due to effects on the excitation state of the receiving electrode 5, that the frequency adjustment line 12 connected to the receiving electrode 5 be formed so as to extend in a direction parallel to the direction of excitation of the receiving electrode 5. When forming the output line 8 on the same plane as the rectangular receiving electrode 5, it is preferable from the standpoint of avoiding a reduction in receiving efficiency through effects on the excitation state of the receiving electrode 5, that the output line 8 connected to the receiving electrode 5 be formed so as to extend in a direction perpendicular to the direction of excitation of the receiving electrode 5.

When the ground electrode 3 is formed over approximately the entire surface inside the substrate 2, the rectangular receiving electrode 5 is formed on one surface of the substrate 2, and the frequency adjustment line 12, output line 8 and the like are respectively formed on the other side of the substrate 2, the frequency adjustment line 12 and the output line 8 can be formed so as to extend in a desired direction as required by the circuit wiring pattern, parts layout and so forth, regardless of the direction of excitation of the receiving electrode 5.

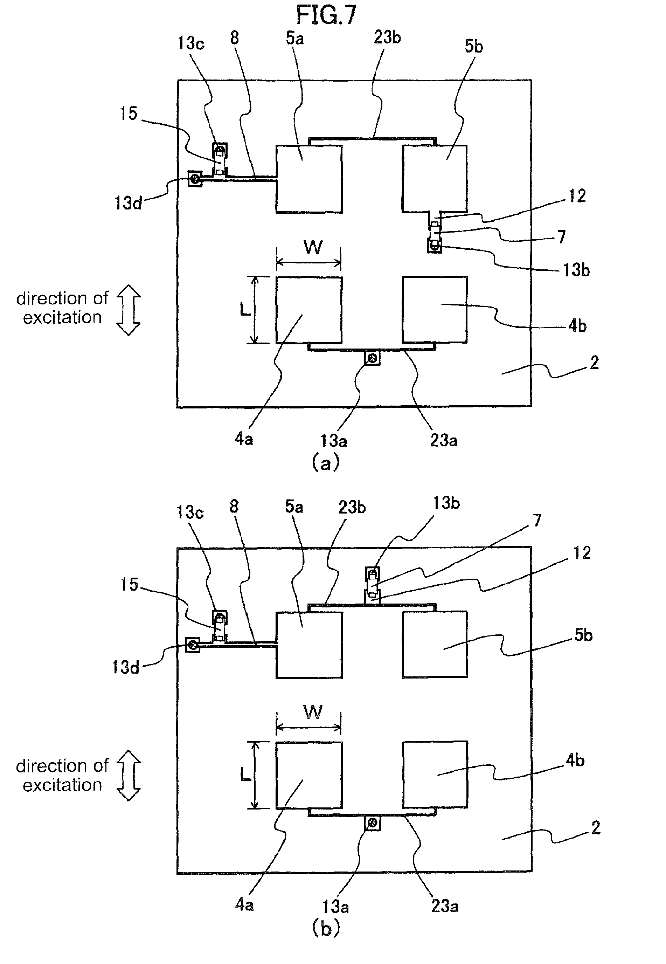

In the radio wave sensor shown in Variation 5 in Fig. 7(a), a ground electrode 3 (not shown) is formed over approximately the entire surface of either the interior or the other surface of the substrate 2 formed of a dielectric body, and multiple transmission electrodes 4a, 4b and multiple receiving electrodes 5a, 5b are formed on one surface of the substrate 2. The multiple transmission electrodes 4a, 4b and multiple receiving electrodes 5a, 5b are microstrip antennas or thin-film rectangular antenna electrodes on the substrate 2, having a length L on at least one side corresponding to approximately 1/2 the wavelength (λg/2) of the frequency of the high-frequency signal, and the ground electrode 3 (not shown) is acting as a reflection plate.

The multiple transmission electrodes 4a, 4b are mutually connected via a transmission line 23a serving as an electrical power distribution circuit; the high-frequency signal produced in the oscillator circuit (not shown) is propagated to the transmission electrodes 4a, 4b via the conducting hole 13a and the transmission line 23a. The multiple receiving electrodes 5a, 5b are mutually connected via a transmission line 23b which serves as an electrical power distribution circuit. One of either the anode or the cathode terminal of the diode 7 is connected to the receiving electrode 5b via the frequency adjustment line 12 at approximately the center portion of the edge perpendicular to the direction of excitation, and the other terminal is connected to the ground electrode 3 (not shown) via a conducting hole 13b. On the receiving electrode 5a, the output line 8 which externally outputs the results detected by the diode 7 is connected at approximately the center portion of the edge parallel to the direction of excitation. An amplifier circuit (not shown) is connected to a later stage of the output line 8 via a conducting hole 13d. Furthermore, a resistor 15 is connected to the output line 8 as a voltage adjustment means 9 for adjusting the voltage value of the detection signal output from the diode 7. One terminal of the resistor 15 is connected to the ground electrode 3 (not shown) via a conducting hole 13c, and the other terminal thereof is connected to the output line 8. The resonant frequency of the mutually connected multiple receiving electrodes 5a, 5b via the transmission line 23b can be set to a desired frequency by adjusting the length of the frequency adjustment line 12 connected to the receiving electrode 5b.

As shown in Fig. 7(a), by disposing the multiple transmission electrodes 4a, 4b and the multiple receiving electrodes 5a, 5b at a predetermined spacing between elements in order to improve the antenna design of the radio wave sensor, high-frequency signals colliding with a detected object and reflected back can also be efficiently detected, dark noise in the detected signal output via the output line 8 can be reduced, and a high S/N ratio can be obtained.

In the radio wave sensor shown in Variation 5, the diode 7 is connected to the receiving electrode 5b via the frequency adjustment line 12, and the output line 8 is connected to the receiving electrode 5a. However, the invention is not limited to this form, and the output line 8 may be connected to approximately the center portion of the edge of the receiving electrode 5b parallel to the direction of excitation, or may be connected at a position on the transmission line 23b where the current of the high-frequency signal propagated on the transmission line 23b is approximately at a maximum (the electric field is approximately at a minimum).

The transition line 23b mutually connecting the multiple receiving electrodes 5a, 5b acts not only to propagate high-frequency signals, but as an antenna. Therefore the previously described operational effects can also be obtained, as in the radio wave sensor shown in Variation 6 of Fig. 7(b), when either the anode or the cathode terminal of the diode 7 is connected at approximately the center portion of the transmission line 23b via the frequency adjustment line 12, and the other terminal is connected to the ground electrode 3 (not shown) via the conducting hole 13b. In Variations 5 and 6, there is a DC electrical conduction to the resistor 15 via the output line 8 from the terminal of the diode 7 not connected to the ground electrode 3 (not shown), therefore the voltage value of the detection signal output from the diode 7 can be adjusted by adjusting the resistance value of the resistor 15 connected to the output line 8.

In the embodiment described above, the same number of transmission electrodes 4 and receiving electrodes 5 are formed on the surface of the substrate 2, but without such limitation, multiple transmission electrodes 4a, 4b, mutually interconnected via the transmission line 23 serving as a power distribution circuit, may be disposed on the surface of the substrate 2, and at least one receiving electrode 5 may be formed at a position at which at least a portion thereof faces the edge of one of the transmission electrodes among the multiple transmission electrodes 4a, 4b. In such cases, the power of the high-frequency signal produced by the oscillator circuit 1 is distributed to the multiple transmission electrodes 4a, 4b and propagated, therefore the turning back of high-frequency signal electrical power from the transmitting electrode 4 adjacent to the receiving electrode 5 to the receiving electrode 5 can be reduced. The electrical power of the signal input to the diode 7 connected to the receiving electric 5 can therefore be reduced, as can the dark noise in the detection signal output from the output line 8 connected to the receiving electrode 5 when there is no detected object in the detection area.

We omit below a discussion of those portions which overlap the embodiments already discussed.

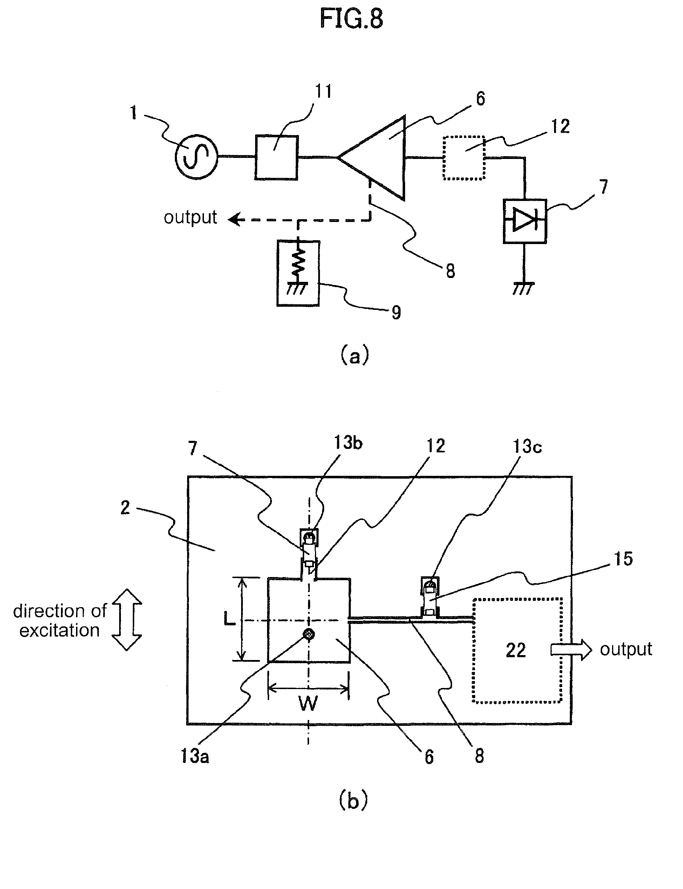

Fig. 8 is (a) a circuit block diagram, and (b) a front elevation of a radio wave sensor according to a second embodiment of the present invention.

In the radio wave sensor shown in Fig. 2, the transmitting electrode 4 for transmitting a high-frequency signal, and the receiving electrode 5 for receiving a high-frequency signal, are formed on the surface of a substrate 2. By contrast, in the radio wave sensor shown in Fig. 8, the transmitting/receiving electrode 6 as a single antenna for transmitting and receiving the high-frequency signal produced by the oscillator circuit 1 (not shown) is formed on the surface of the substrate 2. The high-frequency signal produced in the oscillator circuit 1 (not shown) is propagated to an electrical feeding point provided on the transmitting/receiving electrode 6 via a signal transmission means 11. "Electrical feeding point" here refers to the following: if, for example, the oscillator circuit 1 and the transmitting/receiving electrode 6 are connected via a transmission line as a signal transmission means 11, then assuming the transmission line has an impedance of 50Ω, the internal position at which the impedance of the transmitting/receiving electrode 6 is 50Ω is the electrical feeding point. Therefore electrical feeding point refers to the position at which matching occurs so that there is almost no reflection at the point of connection when the signal transmission means 11 is connected to the transmitting/receiving electrode 6. The signal transmission means 11 comprises an impedance-matched transmission line; a filter circuit for electrically separating (insulating) the oscillator circuit 1 (not shown) from the transmitting/receiving electrode 6; and a conducting hole 13a which penetrates the substrate 2, which efficiently propagates the high-frequency signal. If, by the inherent circuit structure of the oscillator circuit 1, the terminal at which the high-frequency signal is output from the oscillator circuit 1 are DC-isolated from the transmitting/receiving electrode 6, there is no need to provide a filter circuit to the signal transmission means 11.

The transmitting/receiving electrode 6 is a microstrip antenna or a thin-film rectangular antenna electrode on a substrate 2, having a length L on at least one side corresponding to approximately 1/2 the wavelength (λg/2) of the frequency of the high-frequency signal, and the ground electrode 3 (not shown) is acting as a reflection plate. In order to improve wave detection efficiency, the diode 7 is connected not to the transmission line pathway connecting the oscillator circuit 1 and the transmitting/receiving electrode 6, but rather to approximately the center portion of the edge of the transmitting/receiving electrode 6 perpendicular to the direction of excitation, via the frequency adjustment line 12. One of either the anode terminal or the cathode terminal of the diode 7 is connected to the frequency adjustment line 12; the other terminal thereof is connected to the ground electrode 3 (not shown) via the conducting hole 13b.

In the radio wave sensor of Claim 1 shown in Fig. 14, the anode terminal of the diode 7 is directly connected to a point midway along the pathway of the transmission line 11 serving as the signal transmission means. Therefore in the radio wave sensor shown in Fig. 14, a portion of the electrical power of the high-frequency signal produced by the oscillator circuit 1 is input to the diode 7. The power of the high frequency signal transmitted to the space from the transmitting/receiving antenna 6 is thus necessarily reduced. In the radio wave sensor shown in Fig. 8, the diode 7 is not connected midway along the pathway of the signal transmission means 11 connecting the oscillator circuit 1 (not shown) to the transmitting/receiving electrode 6. The electrical power of the high-frequency signal produced in the oscillator circuit 1 is therefore propagated to the transmitting/receiving electrode 6 with virtually no attenuation, and can be transmitted as a radio beam. High-frequency signals colliding with and returned from a detected object present within the detection area can be efficiently detected. In particular, by adjusting the length of the frequency adjustment line 12 such that the electrical length from the point of connection between the transmitting/receiving electrode 6 and the frequency adjustment line 12 via the diode 7 to the ground electrode 3 (not shown) is λg/4, dark noise in the detection signal detected and output by the diode 7 can be minimized, and a high S/N ratio can be obtained.

At this point, the output line 8 for externally outputting the results of the wave detection done by the diode 7 is connected to approximately the center portion of an edge of the transmitting/receiving electrode 6 parallel to the direction of excitation, and an amplifier circuit 22 is connected at a subsequent stage of the output line 8. At approximately the center portion of the edge of the rectangular transmitting/receiving electrode 6 parallel to the direction of excitation is the position at which the current of the high-frequency signal propagated on the transmitting/receiving electrode 6 is approximately at a maximum (the electrical field is approximately at a minimum). Since there is no change made to the state of the high-frequency signal propagated on the transmitting/receiving electrode 6, no effect is exerted on the resonant frequency (phase) of the transmitting/receiving electrode 6. The results detected by the diode 7 can therefore be transmitted to an amplifier circuit while maintaining the directional gain and directional configuration (maximum radiating intensity direction, half-value angle).

Patent Reference 1 sets forth only that in the radio wave sensor shown in Fig. 14, the anode terminal of the diode 7 is directly connected along the pathway of the transmission line 11 connecting the oscillator circuit 1 and the transmitting/receiving antenna 6. In general, however, the detecting stub 31 and the output line 8 for externally outputting the results (detection signal) detected by the diode 7 are connected to a subsequent stage (cathode terminal) of the diode 7. Also, it is not necessarily true that the diode 7 can be connected at a position on the transmission line 11 where current of the high-frequency signal propagated on the transmission line 11 is at a minimum (node). A high frequency blocking stub 32 to prevent external output of the high-frequency signal is therefore connected to the output line 8.

By contrast, in the radio wave sensor shown in Fig. 8, the propagation path propagating the high-frequency signal from the connection point between the transmitting/receiving electrode 6 and the frequency adjustment line 12 to the ground electrode 3 (not shown) is a resonant circuit and, furthermore, the output line 8 is connected to approximately the center portion of an edge parallel to the direction of excitation of the transmitting/receiving electrode 6. Therefore virtually no high-frequency signal is externally output even if a high frequency blocking stub is not connected to the output line 8. Thus the radio wave sensor shown in Fig. 8, when compared to conventional radio wave sensors, allows for a simpler circuit structure, smaller size, and lower manufacturing cost.

In the radio wave sensor shown in Fig. 8, an amplifier circuit 22 is disposed on one of the surfaces of the substrate 2. When results detected by the diode 7 are externally output via the amplifier circuit 22 using this configuration, signal processing is facilitated, radio wave sensor noise resistance is improved, and voltage value fluctuations (dark noise) in the detection signal externally output from the output line 8 can be suppressed.

The radio wave sensor shown in Fig. 8 is furnished with a resistor 15 serving as a voltage adjustment means 9 for adjusting the voltage value of the detection signal output from the diode 7. One terminal of the resistor 15 is connected to the ground electrode 3 (not shown) via a conducting hole 13c; the other terminal thereof is connected to the transmitting/receiving electrode 6 via the output line 8. Therefore when there is no detected object in the detection area of the radio wave sensor, adjusting the resistance value of the resistor 15 and optimizing the voltage of the detection signal output from the diode 7 causes a frequency component (wave) to appear on the detection signal output from the radio wave sensor when a detected object is present or moves within the detection area, even if the DC power supply voltage applied to the radio wave sensor is decreased to reduce electrical power consumption. Thus in the radio wave sensor of the present embodiment, the mobile state of the detected object (moving speed and relative moving distance) can be easily discerned from the frequency of the detection signal (period => time) and the frequency of the high-frequency signal transmitted from the transmitting/receiving electrode 6 (wavelength => distance).

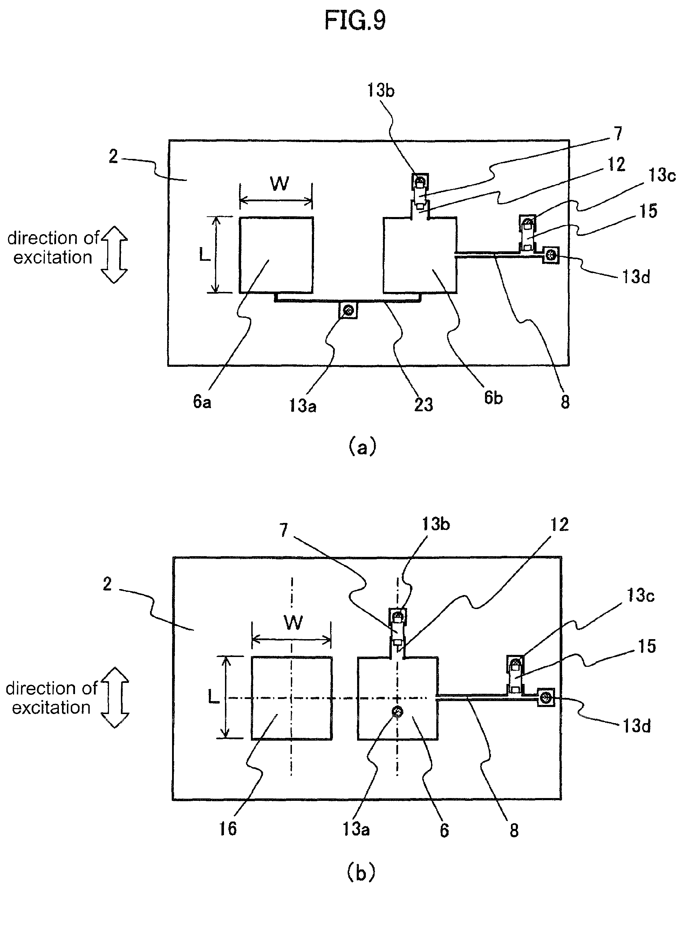

In the radio wave sensor shown in Variation 7 in Fig. 9(a), multiple rectangular transmitting/receiving electrodes 6a, 6b are formed at a predetermined spacing on the surface of a substrate 2. The multiple receiving electrodes 6a, 6b are mutually connected via a transmission line 23 which serves as an electrical power distribution circuit. A conducting hole 13a penetrating the substrate 2 is formed at the center portion of the transmission line 23, and high-frequency signals produced in the oscillator circuit (not shown) are propagated to the multiple transmitting/receiving electrodes 6a, 6b via the conducting hole 13a and the transmission line 23. Either the anode or the cathode terminal of the diode 7 is connected at approximately the center portion of the edge perpendicular to the direction of excitation of the transmitting/receiving electrode 6b via the frequency adjustment line 12, and the other terminal is connected to the ground electrode 3 (not shown). An output line 8 is connected at approximately the center portion of the edge parallel to the direction of excitation of the transmitting/receiving electrode 6b, and a resistor 15 is connected to the output line 8. One of either of the terminals of the resistor 15 is connected to the ground electrode 3 (not shown) via a conducting hole 13c, and the other terminal thereof is connected to the output line 8.

Because multiple transmitting/receiving electrodes 6a, 6b are mutually conductively connected via the transmission line 23, antenna gain can be improved, detection of high-frequency signals received by the multiple transmitting/receiving electrodes 6a, 6b from a relatively small detection area can be efficiently performed by the diode 7, and a high S/N ratio can be obtained. In the radio wave sensor shown in Fig. 9(a), the directionality of the radio beam can be easily controlled to radiate the radio beam in a desired direction by adjusting the length of the transmission line 23 serving as electrical power distribution line (thereby causing the electrical length from the branch point to the transmitting/receiving electrode 6a to be different from the electrical length from the branch point to the transmitting/receiving electrode 6b), and by offsetting the phases of the high-frequency signals propagated on the transmitting/receiving electrode 6a and the transmitting/receiving electrode 6b.

In the Variation 8 radio wave sensor shown in Fig. 9(b), a directional control electrode 16 is further applied to the radio wave sensor shown in Fig. 8. The directional control electrode 16 is disposed on the same plane as the transmitting/receiving electrode 6, and an increase in radio beam directional gain, as well as the directional configuration (maximum radiation intensity direction, half-value angle), can be controlled and accomplished by adjusting the shape of the directional control electrode 16 and the inter-element spacing relative to the transmitting/receiving electrode 6. In the radio wave sensor shown in Fig. 2, the high-frequency signal transmission area and receiving area are different, but in the radio wave sensor shown in Variation 8, the radio wave sensor high-frequency signal transmission area and receiving area match one another or are identical.

In both the radio wave sensors shown in Figs. 8 and 9, the shape of the transmitting/receiving electrode 6 is rectangular, the frequency adjustment line is connected at approximately the center portion of the edge of the transmitting/receiving electrode 6 perpendicular to the direction of excitation, and the output line 8 is connected at approximately the center portion of the edge of the transmitting/receiving electrode 6 parallel to the direction of excitation. In this configuration, the transmitting/receiving electrode 6 can be handled in the same manner as the receiving electrode 5 in the previously described radio wave sensor in which the transmitting electrode 4 and the receiving electrode 5 are separately provided. Therefore the same type of circuit configuration (a diode or output line, voltage adjustment means, or the like) as that connected to the receiving electrode 5 can also be applied to the transmitting/receiving electrode 6, and a similar operational effect achieved. Furthermore, if the output line 8 and the resistor 15 serving as a voltage adjustment means 9 are DC electrically conductive with respect to the transmitting/receiving electrode 6, and are connected along the pathway of the transmission line at a position where the current of the high frequency signal propagated on the transmission line serving as the transmission line 11 is at a maximum (electrical field is at a minimum), then propagation to the transmitting/receiving electrode 6 can be achieved with virtually no loss of electrical power in the high-frequency signal produced by the oscillator circuit 1.

The radio wave sensor shown in Figs. 8 and 9 is provided with a so-called multilayer substrate 2 in which a ground electrode 3 is formed over approximately the entire surface of the interior; an oscillator circuit (not shown) is provided on one surface of this laminated substrate 2 and a transmitting/receiving electrode 6 is provided on the other surface thereof. However, it is also acceptable to use a single layer substrate 2 in place of the laminated substrate 2, forming a ground electrode 3 (not shown) over approximately the entire surface of one surface of the single layer substrate 2 and disposing an oscillator circuit 1 (not shown) and a transmitting/receiving electrode 6 on the other surface thereof.

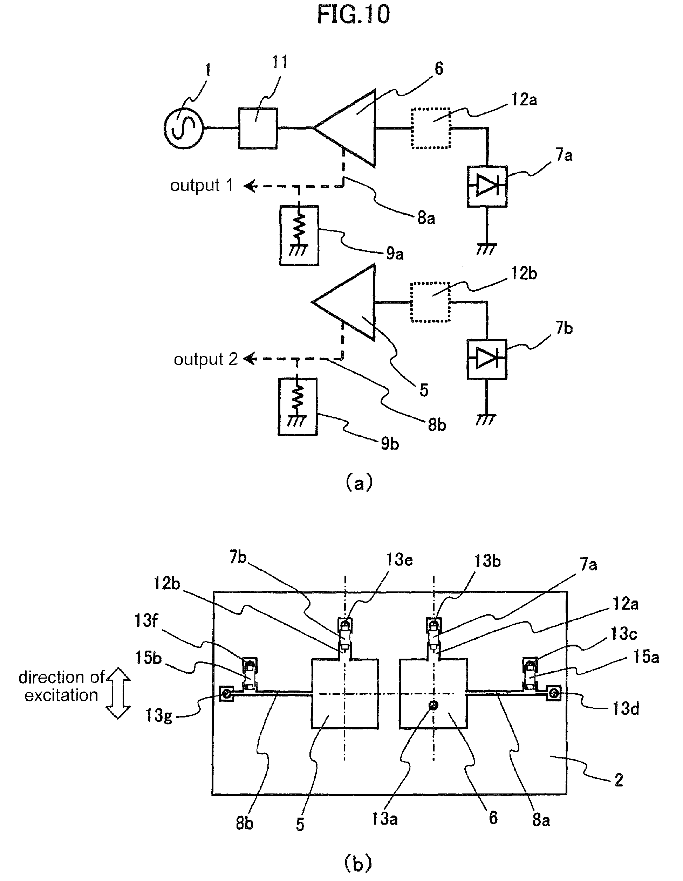

In the radio wave sensor shown in Fig. 10, the circuit configuration on the receiving electrode 5 side of the radio wave sensor shown in Fig. 2 is further applied to the radio wave sensor shown in Fig. 8. Also, an amplifier circuit (not shown) is disposed on the surface of the substrate 2 which is not the surface on which the transmitting/receiving electrode 6 and the transmitting/receiving electrode 6 are formed.

In the radio wave sensor shown in Fig. 10, a ground electrode 3 is formed over approximately the entire surface of the interior of the substrate 2, and the rectangular transmitting/receiving electrode 6 (first antenna electrode) and receiving electrode 5 (second antenna electrode) are formed at a predetermined spacing on the surface of the substrate 2. One of either the anode or the cathode terminals of the diodes 7a, 7b are respectively connected at approximately the center portion of the edge perpendicular to the direction of excitation of the transmitting/receiving electrode 6 and the receiving electrode 5 via frequency adjustment lines 12a, 12b, and the other terminals of the diodes 7a, 7b are respectively connected to the ground electrode 3 (not shown) via conducting holes 13b, 13e. Output lines 8a, 8b are connected at approximately the center portion of the edge parallel to the direction of excitation of the transmitting/receiving electrode 6 and the receiving electrode 5. Also, a resistor 15a (first voltage adjustment means) for adjusting the voltage value of the detection signal output from the diode 7a (first detection element) and a conducting hole 13d which penetrates the substrate 2 are connected to the output line 8a (first output line). One terminal of the resistor 15a is connected to the ground electrode 3 (not shown) via a conducting hole 13c, and the other terminal thereof is connected to the output line 8a. Also, a resistor 15b (second voltage adjustment means) for adjusting the voltage value of the detection signal output from the diode 7b (second detection element) and a conducting hole 13g which penetrates the substrate 2 are connected to the output line 8b (second output line). One terminal of the resistor 15b is connected to the ground electrode 3 (not shown) via a conducting hole 13f; the other terminal thereof is connected to the output line 8b. A detection signal 1 detected and output from the diode 7a is transmitted to an amplifier circuit (not shown) via the conducting hole 13d; a detection signal 2 detected and output from the diode 7b is transmitted to an amplifier circuit (not shown) via the conducting hole 13g; each is then externally output.

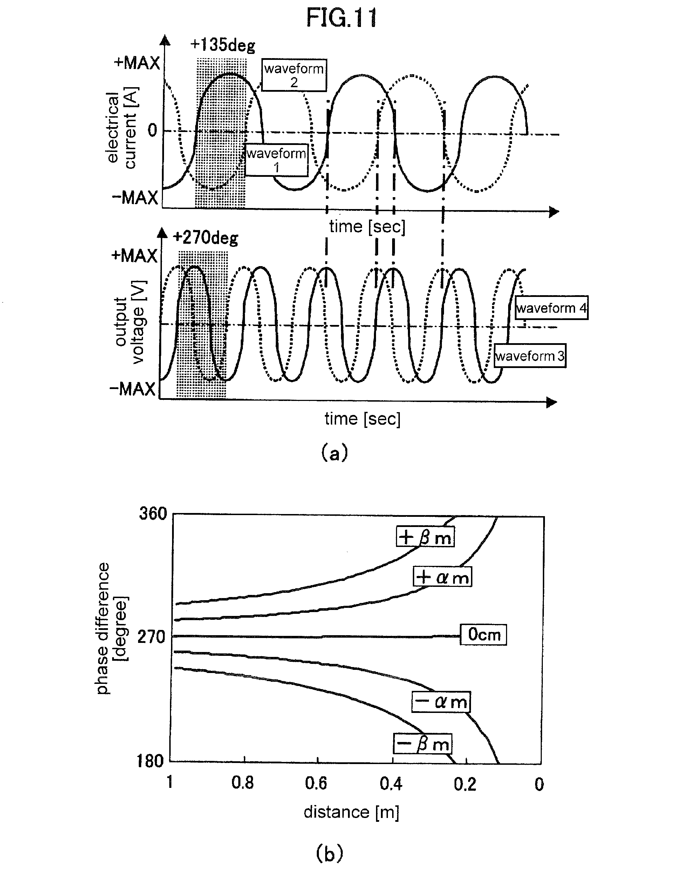

The high-frequency signal produced in the oscillator circuit 1 (not shown) is propagated to the transmitting/receiving electrode 6 via the conducting hole 13a and transmitted as a radio beam. At this point, as described above, a portion of the transmitted high-frequency signal turns back into the receiving electrode 5, and the high-frequency signal is also transmitted from the receiving electrode. The directional gain and directional configuration (maximum radiation intensity direction, half-value angle) of the radio wave beam integrating the high-frequency signal transmitted from the transmitting/receiving antenna 6 and the high-frequency signal transmitted from the receiving antenna 5 are determined by the phase difference between the transmitting/receiving electrode 6 and the receiving electrode 5. This phase difference is determined by the phase of the receiving electrode 5 based on the phase of the transmitting/receiving electrode 6, and by the positional relationship between the transmitting/receiving electrode 6 and the receiving electrode 5. Therefore a presetting to achieve a predetermined resonant frequency (phase) can be achieved by adjusting the length of the frequency adjustment lines 12a, 12b respectively connected to the transmitting/receiving electrode 6 and the receiving electrode 5, and a desired phase difference can be obtained by adjusting the inter-element spacing when the transmitting/receiving electrode 6 and the receiving electrode 5 set up in this way are placed in an array. For example, we consider the case in which the transmitting/receiving electrode 6 and the receiving electrode 5 are placed in relatively close proximity, and a detected object makes a frontal approach to a radio wave sensor in which, as shown in Fig. 11 (a), the phase of the current in the high-frequency signal propagated on the receiving electrode 5 (Waveform 2) is delayed by 135° relative to the phase of the current of the high-frequency signal propagated on the transmitting/receiving electrode 6 (Waveform 1). In this case, the phase of the voltage value of the detected signal 2 transmitted to the amplifier circuit (not shown) via the output line 8b connected to the receiving electrode 5 (waveform 4) is delayed by 70° relative to the phase of the voltage value of the detected signal 1 transmitted to the amplifier circuit (not shown) via the output line 8a connected to the transmitting/receiving electrode 6 (Waveform 3).

Two detection elements (diodes) are provided in the radio wave sensor set forth in Patent Reference 2, and the diodes are respectively connected at positions offset by a predetermined electrical length, e.g. a 1/4 wavelength (λg/4), along the pathway of the transmission line 11 connecting the oscillator circuit 1 and the transmitting/receiving antenna 6 to detect the phase difference. Therefore if the detected object moves so as to approach (or move away from) the radio wave sensor, the phase difference obtained from the two detection signals detected and output from each of the diodes will always be the same, regardless of the position of the approaching (or moving away) detected object.

In the radio wave sensor shown in Fig. 10, the phase difference obtained from the detection signal 1 detected and output from the diode 7a and the detection signal 2 detected and output from the diode 7b correlates to inter-element spacing as well as the phase difference between the transmitting/receiving electrode 6 and the receiving electrode 5. Hence, even if the detected object moves so as to approach (or move away from) the radio wave sensor, the phase difference changes depending on the position of the approaching (or moving away) detected object. In Fig. 10(b) the center position of the straight line joining the center point of the transmitting/receiving electrode 6 and the center point of the receiving electrode 5 is 0 cm; the direction in which the transmitting/receiving electrode 6 is formed is deemed to be the positive area, while the direction in which the receiving electrode 5 is formed is deemed to be the negative area. In this case, as shown in Fig. 11 (b), when the detected object moves in the positive area, the phase difference obtained from the detection signal 1 and the detection signal 2 varies within a range above 270°, and when the detected object moves in the negative area, the phase difference obtained from the detection signal 1 and the detection signal 2 varies within a range below 270°. In both the positive and negative areas, the rate of change in the phase difference increases as the position of the moving detected object becomes more distant from the center position (αm < βm).

A small inter-element space between the transmitting/receiving electrode 6 and the receiving electrode 5 is preferable in light of the rate of change in the phase difference relative to the distance from the sensor. The desired phase difference should therefore be obtained by disposing the transmitting/receiving electrode 6 and the receiving electrode 5 at the smallest manufacturable inter-element spacing, and by adjusting the length of the frequency adjustment lines 12a, 12b respectively connected to the transmitting/receiving electrode 6 and the receiving electrode 5.

In the radio wave sensor shown in Fig. 10, the circuit configuration on the receiving electrode 5 side of the radio wave sensor shown in Fig. 2 is further applied to the radio wave sensor shown in Fig. 8. Therefore when the position of a detected object moving within the detection area is detected from the change in phase difference obtained from the detection signal 1 and the detection signal 2, a high S/N ratio is obtained due to the operational effects described above. Reduced electrical power consumption and size can also be achieved. In the radio wave sensor shown in Fig. 10, the transmitting/receiving electrode 6 and the receiving electrode 5 are disposed in such a way that the edge of the transmitting/receiving electrode 6 parallel to the direction of excitation faces the edge of the receiving electrode 5 parallel to the direction of excitation, but the transmitting/receiving electrode 6 and the receiving electrode 5 may also be disposed in such a way that the edge of the transmitting/receiving electrode 6 perpendicular to the direction of excitation faces the edge of the receiving electrode 5 perpendicular to the direction of excitation.

The previously described operational effects can be also obtained if the receiving electrode 5 (second antenna electrode) and the circuit configuration of the receiving electrode 5 (diode 7b, output line 8b, voltage adjustment means 9b) of the present invention are applied to the radio wave sensor of Patent Reference 1 shown in Fig. 14. In that case the transmitting/receiving electrode 6 (first antenna electrode) of the radio wave sensor of Patent Reference 1 is the same microstrip antenna as in the receiving electrode 5, and its electrode shape has the same polarization direction.

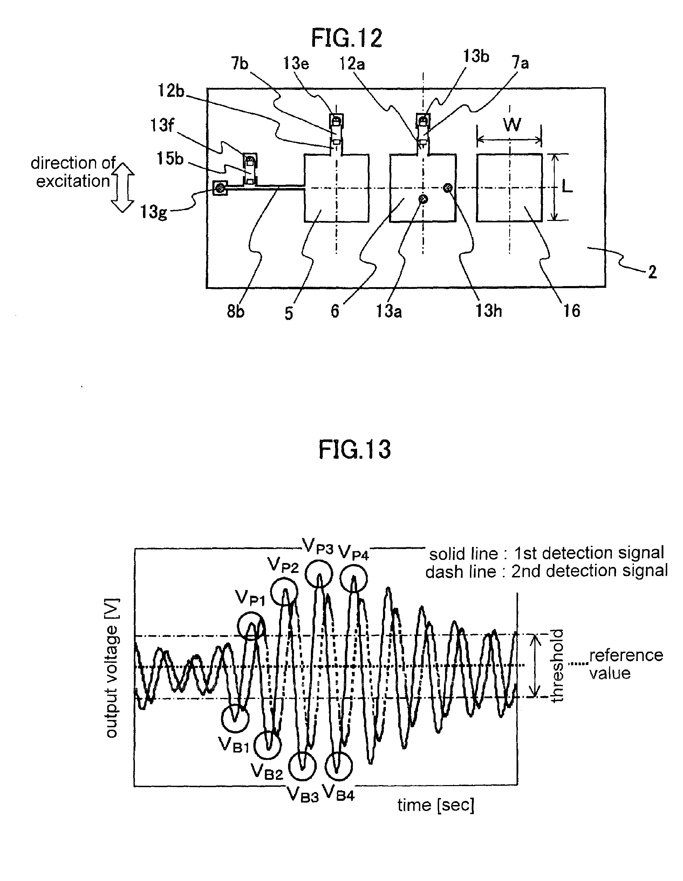

In the Variation 9 radio wave sensor shown in Fig. 12, the output line 8a connected to the transmitting/receiving electrode 6 shown in Fig. 10 and its subsequent circuits are disposed on a surface of the substrate 2 different from the surface on which the transmitting/receiving electrode 6 is formed. A conducting hole 13h penetrating the substrate 2 is formed inside the transmitting/receiving electrode 6 close to approximately the center portion of the edge parallel to the direction of excitation of the transmitting/receiving electrode 6, and the transmitting/receiving electrode 6 and output line 8 are connected via the conducting hole 13h. Furthermore, the resonant frequency (phase) is approximately the same as that of the receiving electrode 5, and the directional control electrode 16 which controls the directional characteristics or configuration of the radio beam is disposed at a position symmetrical to that of the receiving electrode 5 centered on the transmitting/receiving electrode 6. Such a configuration therefore allows bias in the radio beam radiated from the sensor to be adjusted so that a radio beam can be radiated in a perpendicular direction relative to the surface of the substrate 2. A desired resonant frequency for the directional control electrode 16 can be obtained by adjusting the length L of the edge parallel to the direction of excitation and the length W of the edge perpendicular to the direction of excitation; that shape may be a square or a rectangle.

The same circuit configuration (diode, output line, etc.) as that for the receiving electrode 5 may be applied to the directional control electrode 16 to increase the number of detection signals output from the sensor. The detection result output via the output line 8a connected to the transmitting/receiving electrode 6 is deemed to be detection signal 1; the detection result output via the output line 8b connected to the receiving electrode 5 is deemed to be detection signal 2, and the detection result output via an output line (not shown) connected to the directional control electrode 16 is deemed to be detection signal 3. In this case, the length of the frequency adjustment lines respectively connected to the receiving electrode 5 and the directional control electrode 16 are preset (the resonant frequencies differ between the receiving electrode 5 and the directional control electrode) so that the phase difference 1 obtained from the detection signal 1 and the detection signal 2 differs from the phase difference obtained from the detection signal 1 and the detection signal 3 when the detected object approaches (or moves away from) the sensor in the same direction. Such a configuration enables an even more accurate detection of the position or mobile state of a detected object moving in the detection area.

The radio wave sensor of the present invention described above is furnished with single sheet patch antennas respectively serving as a first antenna electrode and a second antenna electrode, and is capable of detecting the phase difference of a detected object. The sensor is therefore desirable, as it can be installed even in locations where the installation environment is cramped. As shown by the graph in Fig. 13, however, the first detection signal and second detection signal respectively received, detected, and externally output from the first antenna electrode and the second antenna electrode are distorted by standing wave effects as the distance from the sensor to the detected object increases. Therefore when a phase difference is continuously detected from the first detection signal and the second detection signal, variability in the phase difference increases and detected object position detection accuracy decreases.

It is therefore preferable to provide a control circuit for discerning the mobile state of a detected object by detecting phase differences from the output voltages of multiple detection signals when the output voltage of at least one of a first detection signal and a second detection signal rises above and falls below a predetermined threshold during a predetermined time period, furnished with: a computation section for calculating an amplitude voltage value from the peak value and bottom value of at least one detection signal among multiple continuously changing detection signals; a memory section for continuously storing the results of the computation section and the times at which the first detection signal and the second detection signal respectively cross a reference voltage value (zero cross); wherein the control circuit detects phase differences from the output voltages of multiple detection signals based on changes in the amplitude voltage values stored in the memory section, and discerns the mobile state of the detected object. For example, an amplitude voltage value is continuously calculated in the computation section from the peak values and bottom values of a first detection signal (V_{P1}, V_{B1}, V_{P2}, ...); these are then stored in memory. The phase difference is detected from the time at which the second detection signal crosses the reference voltage value (in the diagram, the falling edge) at a delay relative to the time at which the first detection signal crosses the reference voltage value (in the diagram, the falling edge) when the amplitude voltage value has reached a maximum (in the diagram, V_{P3} - V_{B4}). By so doing, the position of the detected object can be accurately detected even if the distance from the sensor to the detected object is far.

By arraying multiple patch antennas to act as at least one of the antenna electrodes among the first antenna electrode and the second antenna electrode, directional gain can be increased and the radio beam focused, thereby ameliorating the effect of the standing wave and facilitating control.

In the memory section, the stored amplitude voltage values and times at which the first detection signal and second detection signal respectively crossed the reference voltage value (the zero cross) are erased each time a phase difference is detected. The amplitudes corresponding to the n-th iteration and the times of the respective crossings of the reference voltage value by the first detection signal and the second detection signal (the zero cross) will be erased when the amplitude voltage value calculated at the n-th iteration is smaller than the amplitude voltage value calculated at the (n+1)-th iteration so that control can be effected with a small memory capacity.

Embodiments of the present invention have been explained above, but these embodiments are no more than exemplary illustrations to explain the present invention, and do not intend to limit the scope of the present invention to only the embodiments. The present invention may be practiced in various other forms without departing from the essence thereof.

### Industrial Applicability

0113

The radio wave sensor of the present invention emphasizes design characteristics on the one hand, but is also a superior sensing means for consumer and industrial devices which require small space for installation of sensors and also require the detection range of a relatively close distance; it is particularly optimal for automatic urinals and toilets, water related devices such as automatic faucets and warm water flush toilet seats, automatic doors, and the like.

### Explanation of Reference Numerals

1: oscillator circuit
2: substrate
3: ground electrode
4, 4a, 4b: transmitting antenna (transmitting electrode)
5, 5a, 5b: receiving antenna (receiving electrode)
6: transmitting/receiving antenna (transmitting/receiving electrode)
7, 7a, 7b: wave detecting elements (Schottky diode)
8, 8a, 8b: output lines
9, 9a, 9b: voltage adjustment means
11: signal transmission means
12, 12a, 12b: frequency adjustment lines
13, 13a-13h: conducting holes
14: connecting line
15, 15a, 15b: resistors
16: directional control antenna (directional control electrode)
21: constant voltage output circuit
22: amplifier circuit (operational amplifier)
23, 23a, 23b: electrical power distribution circuits
31: wave detecting stub
32: high frequency blocking stub

## Claims

1. A radio wave sensor comprising:
an oscillator circuit for producing a high-frequency signal;
a substrate formed of a dielectric body;
a ground electrode formed on one surface of the substrate or on approximately the entire surface of the interior thereof, acting as ground to a high-frequency signal;
an antenna electrode formed on the other surface of the substrate, for radiating a high-frequency signal as a radio beam and receiving a radio beam which collides with a detected object and is reflected back from the object; and
a wave detecting element for detecting a high-frequency signal received by the antenna electrode;
wherein one of the terminals of the wave detecting element is connected to a frequency adjustment line for adjusting the frequency of the antenna electrode, and the other terminal of the wave detecting element is connected to the ground electrode; and
the frequency adjustment line is connected to the antenna electrode at a position different from that of an electrical feeding point provided on the antenna electrode to supply electricity to the antenna electrode with the high-frequency signal produced by the oscillator circuit.

2. The radio wave sensor of Claim 1, wherein the frequency adjustment line is connected to the antenna electrode at a position where the impedance of the frequency adjustment line is different from the impedance of the antenna electrode.

3. The radio wave sensor of Claim 1 or 2, wherein the frequency adjustment line is connected to the antenna electrode at a position where the electrical field generated upon excitation of the antenna electrode is approximately at a maximum.

4. The radio wave sensor of any one of Claims 1 through 3, wherein the antenna electrode is a rectangular antenna electrode; and
the frequency adjustment line is connected to an edge of the antenna electrode perpendicular to the direction of excitation of the antenna electrode.

5. A radio wave sensor comprising:
an oscillator circuit for producing a high-frequency signal;
a substrate formed of a dielectric body;
a ground electrode formed on one surface of the substrate or on approximately the entire surface of the interior thereof, acting as ground to a high-frequency signal;
an antenna electrode formed on the other surface of the substrate, for radiating a high-frequency signal as a radio beam and receiving a radio beam which collides with a detected object and is reflected back from the object; and
a wave detecting element for detecting a high-frequency signal received by the antenna electrode;
wherein one of the terminals of the wave detecting element is connected to the ground electrode; and
the other terminal of the wave detecting element is connected to the antenna electrode at a position different from that of an electrical feeding point provided on the antenna electrode to supply electricity to the antenna electrode with the high-frequency signal produced by the oscillator circuit.

6. The radio wave sensor of Claim 5, wherein the other terminal of the wave detecting element is connected to the antenna electrode at a position where the impedance of the other terminal of the wave detecting element is different from the impedance of the antenna electrode.

7. The radio wave sensor of Claim 5 or 6, wherein the other terminal of the wave detecting element is connected to the antenna electrode at a position where the electrical field generated upon excitation of the antenna electrode is approximately at a maximum.

8. The radio wave sensor of any one of Claims 5 through 7, wherein the antenna electrode is a rectangular antenna electrode; and
the other terminal of the wave detecting element is connected adjacent to an edge of the antenna electrode perpendicular to the direction of excitation of the antenna electrode.

9. The radio wave sensor of Claim 1 or 5, further comprising an output line for externally outputting a wave detection signal detected by the wave detecting element;
wherein the electrical length from the antenna electrode to the ground electrode and the position at which the output line is attached to the antenna electrode are defined so that the frequency of the high-frequency signal produced by the oscillator circuit is approximately the same as the resonant frequency of the antenna electrode.

10. The radio wave sensor of Claim 9, wherein the electrical length from the antenna electrode to the ground electrode is defined as the length at which a high-frequency signal passing through the wave detecting element via the antenna electrode is totally reflected at the ground electrode; and
the position at which the output line is attached is defined as the position of the antenna electrode at which the electrical field generated upon excitation of the antenna electrode is approximately at a minimum.

11. The radio wave sensor of Claim 9 or 10, wherein the electrical length from the antenna electrode to the ground electrode is an odd numbered multiple of the 1/4 or quarter wavelength, based on the wavelength determined by the frequency of the high-frequency signal propagated on the substrate.
